# EUROPÄISCHE PATENTSCHRIFT

(11) **EP 3 653 890 B1**
(45) Veröffentlichungstag und Bekanntmachung des Hinweises auf die Patenterteilung: **29.09.2021**
(21) Anmeldenummer: 19209034.8
(22) Anmeldetag: 14.11.2019
(51) Int. Cl.: F16B 5/01

(54) **DÜBEL ZUR ANORDNUNG IN LEICHTBAUPLATTEN, VERFAHREN ZUM FIXIEREN WENIGSTENS EINES DÜBELS UND ANORDNUNG MIT EINEM DÜBEL UND EINER LEICHTBAUPLATTE**
DOWEL FOR ARRANGEMENT IN LIGHTWEIGHT BUILDING PANELS, METHOD FOR FIXING AT LEAST ONE DOWEL AND ARRANGEMENT COMPRISING A DOWEL AND A LIGHTWEIGHT BUILDING PANEL
GOUJON DESTINÉ À ÊTRE AGENCÉ DANS DES PLAQUES DE CONSTRUCTION LÉGÈRE, PROCÉDÉ DE FIXATION D'AU MOINS UN GOUJON ET AGENCEMENT DOTÉ D'UN GOUJON ET D'UNE PLAQUE DE CONSTRUCTION LÉGÈRE

(30) Priorität: 15.11.2018 DE 102018219512
(43) Veröffentlichungstag der Anmeldung: 20.05.2020
(73) Patentinhaber: Adolf Würth GmbH & Co. KG, 74653 Künzelsau (DE); Würth International AG, 7000 Chur (CH)
(72) Erfinder: Beck, Daniel, 69168 Wiesloch (DE); Schulze Niehues, Thorsten, 74653 Künzelsau (DE)
(74) Vertreter: Patentanwälte Ruff, Wilhelm, Beier, Dauster & Partner mbB

(56) Entgegenhaltungen:
- EP-B1- 2 202 050
- DE-A1- 2 061 347

## Beschreibung

Die Erfindung betrifft einen Dübel zur Anordnung in Leichtbauplatten, wobei eine Leichtbauplatte eine erste Deckschicht und eine zweite Deckschicht aus kompaktem drucksteifem Material und eine zwischen den Deckschichten angeordnete Kernschicht aus Material mit gegenüber den Deckschichten geringer Dichte aufweist, insbesondere Papierwaben, Schaumstoff oder Balsaholz, allgemein leichtes Vollholz, mit einem ersten Dübelteil und einem zweiten Dübelteil, wobei das erste und das zweite Dübelteil relativ zueinander verschiebbar ausgebildet sind. Die Erfindung betrifft auch ein Verfahren zum Fixieren eines erfindungsgemäßen Dübels und eine Anordnung mit einem erfindungsgemäßen Dübel und einer Leichtbauplatte.

Leichtbauplatten weisen eine erste Deckschicht und eine zweite Deckschicht aus kompaktem, drucksteifem Material und eine zwischen den Deckschichten angeordnete Kernschicht aus Material mit gegenüber den Deckplatten geringer Dichte auf. Der Kern kann beispielsweise aus Papierwaben oder auch aus Schaumstoff bestehen. Die Befestigung von Dübeln in Leichtbauplatten ist aufgrund der dünnen Deckschichten und der geringen Dichte und geringen Festigkeit der Kernschicht problematisch. Bei Leichtbauplatten können als Kernschichtmaterialien neben Papierwaben und Kunststoffschäumen auch andere Schäume, beispielsweise Holzschäume, oder leichte Vollhölzer, wie zum Beispiel Balsaholz, mit einer erhöhten Festigkeit eingesetzt werden. Werden solche Kernschichtmaterialien mit einer erhöhten Festigkeit mit dünnen, druck- und/oder temperaturempfindlichen und/oder nicht porösen Decklagenmaterialien zu einem Sandwich verpresst, kann vorteilhaft auf eine Verbindung des Dübels mit den Deckschichten, insbesondere mit der, gegenüber der Einbringungsrichtung liegenden Deckschicht, verzichtet werden und es kann nur eine Verbindung mit dem Kernschichtmaterial und/oder einer Grenzschicht zwischen Kernschichten und Deckschichten eingegangen werden. Gerade bei dünnen, druckempfindlichen, temperaturempfindlichen und/oder nicht porösen Deckschichtmaterialien ist dann das Einbringen eines Dübels, dessen Fixierung mittels Einbringung von Ultraschallenergie erfolgt, leichter und vor allem prozesssicher zu bewerkstelligen, da auf die empfindlichen Deckschichten weniger Acht gegeben werden muss.

Aus der europäischen Patentschrift EP 2 202 050 B1 ist ein Dübel zur Anordnung in Leichtbauplatten bekannt, der ein Hülsenelement und ein Kolbenelement aufweist, wobei das Kolbenelement einen Schaftabschnitt aufweist und in einer axialen Richtung in Bezug auf das Hülsenelement verschiebbar ist. Der Dübel wird in eine vorbereitete Sacklochbohrung in die Leichtbauplatte eingesteckt. Das Hülsenelement umgibt über einen Abschnitt von dessen Länge das Kolbenelement vollständig. Durch Einkoppeln mechanischer Ultraschallschwingungen in das Kolbenelement wird eine relativ große Menge an thermoplastischem Kunststoffmaterial, aus dem sowohl das Kolbenelement als auch das Hülsenelement bestehen, verflüssigt und dieses dringt radial nach außen in die Strukturen der ersten Deckschicht und/oder entlang einer Innenoberfläche der ersten Deckschicht sowie in gleicher Weise in die zweite Deckschicht ein. Nach Verfestigung des verflüssigten thermoplastischen Materials ist eine formschlüssige Verbindung zu den beiden Deckschichten erzeugt. Anschließend kann eine Schraube in den im Kolbenelement vorgesehenen Schraubkanal eingebracht werden. Durch die beim Einbringen von mechanischer Ultraschallenergie erzeugte Wärme und den gleichzeitig erzeugten Druck kann es vor allem im Bereich der unteren Deckschicht zu Fehlstellen bzw. Abdrücken auf der Außenseite der unteren Deckschicht, aber auch auf der Außenseite der oberen Deckschicht kommen. Dies ist insbesondere dann der Fall, wenn die Deckschichten mit einer druckempfindlichen und/oder temperaturempfindlichen Oberflächenbeschichtung oder Oberflächenkaschierung versehen sind.

Aus der europäischen Offenlegungsschrift EP 3 228 879 A1 ist ein Verbindungsbeschlag zum Verbinden von zwei senkrecht zueinander angeordneten Leichtbauplatten bekannt, wobei beide Leichtbauplatten eine erste Deckschicht und eine zweite Deckschicht aus kompaktem, drucksteifem Material und eine zwischen den Deckschichten angeordnete Kernschicht aus Material mit gegenüber den Deckschichten geringer Dichte aufweisen. Die erfindungsgemäß topfartig ausgebildeten Teile des Verbindungsbeschlags werden jeweils in eine Sacklochbohrung in den Leichtbauplatten eingebracht, wobei die Sacklochbohrungen jeweils nur die erste Deckschicht und die Kernschicht vollständig durchsetzen. Die beiden Teile des Verbindungsbeschlags weisen an ihrer Unterseite und an ihrer oberen Mantelfläche jeweils Vorsprünge auf, die aus unter Ultraschallbeaufschlagung aufschmelzbarem Kunststoff bestehen, so dass diese Vorsprünge bei Ultraschallbeaufschlagung aufschmelzen und sich im Sackloch mit der oberen und der unteren Deckschicht verbinden. In einem der Teile des Verbindungsbeschlags ist ein Schraubkanal ausgebildet, in welchen eine Schraube eingeschraubt werden kann.

Mit der Erfindung soll ein Dübel zur Anordnung in Leichtbauplatten, ein Verfahren zum Fixieren wenigstens eines Dübels in einer Leichtbauplatte und eine Anordnung mit einem Dübel und einer Leichtbauplatte dahingehend verbessert werden, dass ein flexibler Einsatz in Leichtbauplatten aus unterschiedlichen Materialien von Deckschichten und Kernschichten problemlos möglich ist.

Erfindungsgemäß ist hierzu ein Dübel mit den Merkmalen von Anspruch 1, ein Verfahren mit den Merkmalen von Anspruch 13 und eine Anordnung mit den Merkmalen von Anspruch 15 vorgesehen. Vorteilhafte Weiterbildungen der Erfindung sind in den Unteransprüchen angegeben.

Der erfindungsgemäße Dübel ist zur Anordnung in Leichtbauplatten vorgesehen, wobei eine Leichtbauplatte eine erste Deckschicht und eine zweite Deckschicht aus kompaktem, drucksteifem Material und eine zwischen den Deckschichten angeordnete Kernschicht aus Material mit gegenüber den Deckschichten geringer Dichte aufweist, insbesondere Papierwaben, Schaumstoff oder leichtes Vollholz, beispielsweise Balsaholz. Der Dübel weist einen ersten Dübelteil und einen zweiten Dübelteil auf, wobei das erste und das zweite Dübelteil relativ zueinander verschiebbar ausgebildet sind. Das erste Dübelteil und das zweite Dübelteil weisen jeweils wenigstens zwei sich parallel zu einer Längsrichtung des Dübels erstreckende Finger auf. Durch Vorsehen von Fingern, die sich parallel zu einer Längsrichtung des Dübels erstrecken, wird die Möglichkeit geschaffen, den erfindungsgemäßen Dübel auch an den Kontaktstellen zwischen den Fingern des ersten Dübelteils und/oder des zweiten Dübelteils und dem jeweils anderen Dübelteil in der Leichtbauplatte und insbesondere in der Kernschicht der Leichtbauplatte zu verankern. Die Gestaltung des Dübels mit mehreren sich parallel zu einer Längsrichtung des Dübels erstreckenden Fingern, wobei die Finger des ersten Dübelteils und die Finger des zweiten Dübelteils relativ zueinander verschiebbar sind, ermöglicht eine flexible Anordnung und Befestigung des Dübels in einer Leichtbauplatte. Die relative Verschiebbarkeit des ersten Dübelteils und des zweiten Dübelteils wird aufgrund des Vorsehens von jeweils wenigstens zwei Fingern an dem ersten Dübelteil und an dem zweiten Dübelteil dabei nicht mit einer erhöhten Wandstärke des Dübels erkauft. Denn die Finger des ersten Dübelteils bzw. des zweiten Dübelteils können jeweils gitterartig angeordnet sein, so dass die Finger beim Zusammenfügen des ersten Dübelteils und des zweiten Dübelteils ineinander eingreifen. Im Unterschied zum Stand der Technik liegen die Finger des ersten Dübelteils und des zweiten Dübelteils dadurch in Umfangsrichtung des Dübels nebeneinander und nicht in radialer Richtung hintereinander. Dadurch kann der erfindungsgemäße Dübel sehr kompakt und beispielsweise im Vergleich zum Dübel der EP 2202050 B1 mit geringer Wandstärke aufgebaut werden, ohne dass Kompromisse bei der mechanischen Festigkeit des Dübels eingegangen werden müssen. Durch die Finger am ersten Dübelteil und am zweiten Dübelteil kann nicht nur eine Fixierung in der Kernschicht, sondern auch eine Fixierung mittels eines Hinterschnitts an den beiden Deckschichten erfolgen. Dies ist insbesondere dann vorteilhaft, wenn die Deckschichten sehr dünn sind, aber eine vergleichsweise hohe Dichte und Festigkeit aufweisen. Im zusammengeschobenen Zustand greifen die Finger am ersten Dübelteil und die Finger am zweiten Dübelteil wenigstens abschnittsweise ineinander, so dass das erste Dübelteil und das zweite Dübelteil somit eine hohlzylinderartige Struktur bilden, wobei die Wandung dieser hohlzylinderartigen Struktur über den Umfang gesehen abschnittsweise durch Finger des ersten Dübelteils oder durch Finger des zweiten Dübelteils gebildet ist.

In Weiterbildung der Erfindung bilden die Dübelteile in montiertem Zustand des Dübels einen zylindrischen, insbesondere kreiszylindrischen, Körper.

In Weiterbildung der Erfindung bilden die Finger der beiden Dübelteile im montierten Zustand des Dübels Wandabschnitte eines im Querschnitt ringförmigen, insbesondere kreisringförmigen, Körpers.

Indem die Wandung des Dübels dadurch mindestens abschnittsweise durch Finger des ersten Dübelteils oder Finger des zweiten Dübelteils gebildet ist, kann der erfindungsgemäße Dübel sehr kompakt mit geringer Wandstärke ausgebildet werden.

In Weiterbildung der Erfindung bilden die Finger im Querschnitt gesehen polygonale Segmente, insbesondere eines ringförmigen Körpers.

In Weiterbildung der Erfindung bilden die Finger im Querschnitt gesehen Kreisringsegmente.

Die Finger ergänzen sich dadurch zu einer Kreisringfläche. Ultraschallenergie kann dadurch auch an den Flächen benachbarter Finger, die aneinander anliegen, zu einer Verflüssigung des thermoplastischen Materials der Finger führen. Dadurch kann die Fixierung des Dübels auch in der Kernschicht oder mittels eines Hinterschnitts am Übergang zwischen der Kernschicht und der ersten und/oder zweiten Deckschicht erfolgen.

In Weiterbildung der Erfindung bildet der Körper eine Außenwand mit allgemein dreieckartiger, rechteckiger, elliptischer, ovaler, kreisförmiger oder achtförmiger Querschnittsform.

Je nachdem, für welchen Anwendungszweck der erfindungsgemäße Dübel vorgesehen ist, kann eine Form des Querschnitts des Dübels gewählt werden. Zweckmäßigerweise werden Querschnittsformen gewählt, bei denen passende Sacklöcher in Leichtbauplatten mittels rotierender Werkzeuge, beispielsweise Fräser oder Bohrer, eingebracht werden können.

In Weiterbildung der Erfindung weisen die Finger an ihrem freien Ende wenigstens teilweise eine vorzugsweise schräg zur Längsrichtung des Dübels angeordnete Endfläche auf.

Eine solche schräg zur Längsrichtung des Dübels angeordnete Endfläche an den Fingern kann für verschiedene Zwecke genutzt werden. Zum einen kann dadurch eingebrachte Ultraschallenergie so gerichtet werden, dass eine schnelle Erwärmung und damit Erweichung oder Verflüssigung des thermoplastischen Materials der Finger erfolgt. Eine schräge Endfläche der Finger kann auch dazu genutzt werden, eine Spreizwirkung der Finger beim Ineinanderschieben des ersten Dübelteils und des zweiten Dübelteils zu erzeugen. Darüber hinaus kann durch eine schräge Endfläche der Finger der Bereich, in dem eine stoffschlüssige und/oder formschlüssige Fixierung mit dem Material der Leichtbauplatte erfolgt, über einen etwas größeren Höhenbereich der Leichtbauplatte verteilt werden.

Beim Vorsehen einer schrägen Endfläche der Finger kann die gegenüberliegende Anschlagfläche am jeweils anderen Dübelteil geeignet gestaltet sein, um beispielsweise beim Einbringen von Ultraschall als Energierichtungsgeber zu wirken, um eine zuverlässige Verbindung der Finger und der Gegenfläche beim Einbringen von Ultraschallenergie und dem nachfolgenden Erkalten des thermoplastischen Materials zu bewirken und/oder um eine radiale Aufspreizung der Finger beim Auflaufen auf die Gegenflächen zu bewirken. Beispielsweise können bei schrägen Endflächen der Finger auch die Anschlagflächen des anderen Dübelteils schräg gestaltet sein, so dass beim Zusammenschieben der beiden Dübelteile und beim Auflaufen der Finger auf die gegenüberliegenden Anschlagflächen die Finger in radialer Richtung nach außen gedrückt werden. Die Endflächen der Finger können beispielsweise auch dachförmig oder gar kegelförmig ausgebildet sein, um als Energierichtungsgeber beim Einbringen von Ultraschallenergie zu wirken. Die Endflächen der Finger bzw. die gegenüberliegenden Anschlagflächen können beispielsweise auch Ausnehmungen aufweisen, die dann passend zu den Endflächen bzw. Endgestaltungen der Finger ausgebildet sind, um als Energierichtungsgeber zu wirken und um eine zuverlässige Verschweißung der Finger und der gegenüberliegenden Anschlagflächen beim Einbringen von Ultraschallenergie und dem nachfolgenden Erkalten zu gewährleisten. In Weiterbildung der Erfindung läuft die Endfläche schräg auf die Mittellängsachse des Dübels zu und/oder die Endfläche verläuft in einer Seitenansicht des Dübels ansteigend.

Erfindungsgemäß ist somit vorgesehen, dass die Endfläche schräg nach oben oder schräg nach unten auf die Mittellängsachse des Dübels zuläuft. Dabei sind im Rahmen der Erfindung auch sich verjüngende Enden der Finger mit abgedeckt, bei denen zwei schräge Endflächen auf eine Endkante zulaufen. Darüber hinaus können die Endflächen so angeordnet sein, dass sie, gegebenenfalls zusätzlich zu einer schräg nach oben oder nach unten zulaufenden Anordnung, in Umfangsrichtung ansteigen oder abfallen.

In Weiterbildung der Erfindung sind die Finger in Längsrichtung des Dübels sich verjüngend ausgebildet, wobei die Finger des ersten Dübelteils sich nach unten verjüngend und die Finger des zweiten Dübelteils sich nach oben verjüngend ausgebildet sind.

In einer Seitenansicht bzw. in einer Abwicklung der Mantelfläche des Dübels ergibt sich dadurch eine Form der Finger, die als dreieckartig oder als dreieckartig mit gekappter Spitze beschrieben werden kann. Beim Zusammenschieben des ersten Dübelteils und des zweiten Dübelteils lassen sich dadurch die beiden Dübelteile nur so weit aufeinander zu verschieben, bis die Seitenflächen der jeweils dreieckartigen Finger aneinander anliegen. Ein weiteres Zusammenpressen der Dübelteile kann bei entsprechender Gestaltung der Seitenflächen dann zu einem gegebenenfalls erwünschten Aufspreizen im Mittenbereich des Dübels führen, um eine Fixierung in der Kernschicht zu erzielen. Die Gestaltung der aneinander anliegenden Seitenflächen der dreieckartigen Finger kann aber auch so sein, dass keine Aufspreizung, aber durch eingeleitete Ultraschallenergie eine schnelle Erwärmung und gegebenenfalls Verflüssigung des thermoplastischen Materials der Finger im Bereich der aneinander anliegenden Seitenflächen erfolgt.

In Weiterbildung der Erfindung weisen die Finger wenigstens teilweise in einer Seitenfläche, die einem benachbarten Finger gegenüberliegt, insbesondere an einem benachbarten Finger anliegt, insbesondere in Längsrichtung der jeweiligen Finger, eine oder mehrere Stufen auf.

Kontaktstellen der Finger des ersten Dübelteils und der Finger des zweiten Dübelteils können dadurch auf mehrere Ebenen verlegt werden. Diese Ebenen können dabei sowohl in Längsrichtung des Dübels unterschiedlich sein als auch in radialer Richtung des Dübels. Durch solche gestufte Seitenflächen und Verteilung der Kontaktflächen der Finger auf mehrere Ebenen lässt sich eine besonders zuverlässige Fixierung des Dübels in Leichtbauplatten erzielen.

In Weiterbildung der Erfindung liegen einander gegenüberliegende Seitenflächen benachbarter Finger im montierten Zustand des Dübels aneinander an.

Die Finger bilden gemeinsam dadurch einen ringförmigen Körper. Eine Stufung der Seitenflächen in Längsrichtung des Dübels kann dabei einen definierten Endanschlag und damit eine definierte Länge des Dübels im montierten Zustand sicherstellen. Darüber hinaus kann dadurch eine Erwärmung und Verflüssigung des thermoplastischen Materials des Dübels im Bereich der Stufen und dadurch eine Fixierung des Dübels an einer gewünschten Stelle über die Dicke der Leichtbauplatte erzielt werden.

In Weiterbildung der Erfindung weisen die Finger in einer Schnittebene senkrecht zur Längsachse eine oder mehrere Stufen in den Seitenflächen auf.

Eine solche Stufung in radialer Richtung des Dübels kann dann, wenn die Seitenflächen aneinander anliegen, nicht nur für einen geschlossenen ringförmigen Querschnitt der Dübelwand sorgen, sondern es kann auch verhindert werden, dass die Finger beim Zusammenschieben des ersten Dübelteils und des zweiten Dübelteils in radialer Richtung ausweichen, sondern vielmehr in Längsrichtung aneinandergeführt sind.

In Weiterbildung der Erfindung sind die beiden Dübelteile und die Finger so ausgebildet, dass die Finger im montierten Zustand des Dübels an ihren freien Enden radial nach außen gedrückt werden.

Die Enden der Finger und/oder der Grundkörper der Dübelteile weisen dabei Schrägflächen auf, so dass beim Zusammenschieben der Dübelteile aufeinander zu die freien Enden der Finger nach außen gedrückt werden. Dadurch kann eine Spreizwirkung des Dübels erzeugt werden, die entweder im Bereich der Deckschichten oder auch im Bereich der Kernschicht für eine stabilere Fixierung sorgt. Durch eine solche Spreizwirkung kann auch erreicht werden, dass der Dübel die erste Deckschicht und/oder die zweite Deckschicht hinterschneidet und dadurch ebenfalls sicher in der Leichtbauplatte fixiert ist.

In Weiterbildung der Erfindung bilden die beiden Dübelteile im montierten Zustand des Dübels einen Schraubkanal aus.

Der Schraubkanal kann dabei auf den vorgesehenen Anwendungszweck abgestimmt werden und beispielsweise für das Einschrauben eines Gewindebolzens, einer Holzschraube, einer sonstigen Schraube und dergleichen ausgebildet sein.

In Weiterbildung der Erfindung weist wenigstens eines der Dübelteile radial nach innen ragende Vorsprünge zum Ausbilden des Schraubkanals auf.

Auf diese Weise kann der Schraubkanal durch die Vorsprünge nur eines Dübelteils oder auch beider Dübelteile gebildet werden. Durch geeignete Ausbildung der Vorsprünge, beispielsweise mit dreieckartigem Querschnitt, können sich mehrere Vorsprünge zu einem annährend geschlossenen Umfang des Schraubkanals ergänzen, wenn nur kleine Abstände zwischen den Vorsprüngen vorgesehen sind.

In Weiterbildung der Erfindung sind die Vorsprünge an der Innenseite der Finger angeordnet.

In Weiterbildung der Erfindung weist jedes Dübelteil einen Grundkörper auf, mit dem die Finger jeweils eines Dübelteils verbunden sind.

Beispielsweise ist der Grundkörper scheibenartig, insbesondere ringförmig, ausgebildet. Der Grundkörper dient bei wenigstens einem Dübelteil auch zum Einleiten von Ultraschallenergie und ein Außenumfang des Grundkörpers kann hierzu wenigstens bei einem der Dübelteile beispielsweise mit zahlreichen kleinen Vorsprüngen versehen sein, die die Ultraschallenergie ausrichten und für eine schnelle Erwärmung bzw. Verflüssigung des thermoplastischen Materials des Dübels sorgen.

In Weiterbildung der Erfindung ist ein erstes Ende der Finger mit dem Grundkörper verbunden und die Finger erstrecken sich von dem Grundkörper aus bis zu ihrem freien Ende.

In Weiterbildung der Erfindung sind das erste Dübelteil und das zweite Dübelteil identisch ausgebildet.

In Weiterbildung der Erfindung besteht der Dübel wenigstens abschnittsweise aus einem thermoplastischen Material.

In Weiterbildung der Erfindung bestehen mindestens die freien Enden der Finger, insbesondere mindestens die vollständigen Finger, aus thermoplastischen Material.

Mit der Erfindung wird auch ein Verfahren zum Fixieren wenigstens eines erfindungsgemäßen Dübels in einer Leichtbauplatte mit folgenden Schritten bereitgestellt: Einbringen eines Lochs in die Leichtbauplatte, insbesondere eines Sacklochs, Einführen des ersten und des zweiten Dübelteils in das Loch, so dass die Finger der beiden Dübelteile wenigstens abschnittsweise ineinandergreifen, Beaufschlagen des Dübels mit Ultraschallenergie, so dass das thermoplastische Material des Dübels wenigstens in den Bereichen, in denen der Dübel an der Innenwandung des Lochs im Bereich der ersten Deckschicht, der zweiten Deckschicht und/oder im Bereich der Kernschicht anliegt, in pastösen oder fließfähigen Zustand gebracht wird, in die erste Deckschicht, in die zweite Deckschicht und/oder in die Kernschicht eindringt, sich mit dem Material der Leichtbauplatte verbindet und nach dem Abschalten der Ultraschallenergie erkaltet, so dass der Dübel stoffschlüssig und/oder formschlüssig in der Leichtbauplatte fixiert wird.

Gemäß der Erfindung ist auch eine Anordnung mit einem erfindungsgemäßen Dübel und einer Leichtbauplatte vorgesehen, wobei die Finger der beiden Dübelteile wenigstens abschnittsweise ineinandergreifen.

In Weiterbildung der Erfindung ist das erste Dübelteil wenigstens an der ersten Deckschicht fixiert, das zweite Dübelteil ist wenigstens an der zweiten Deckschicht fixiert und/oder das erste und das zweite Dübelteil sind wenigstens an der Kernschicht fixiert.

In Weiterbildung der Erfindung sind die Finger des ersten und/oder des zweiten Dübelteils wenigstens abschnittsweise in der Kernschicht der Leichtbauplatte fixiert.

Weitere Merkmale und Vorteile der Erfindung ergeben sich aus den Ansprüchen und der folgenden Beschreibung bevorzugter Ausführungsformen der Erfindung. Einzelmerkmale der unterschiedlichen, in den Figuren dargestellten und der Beschreibung beschriebenen Ausführungsformen lassen sich dabei in beliebiger Weise miteinander kombinieren, ohne den Rahmen der Erfindung zu überschreiten. Dies gilt auch dann, wenn Einzelmerkmale ohne weitere Einzelmerkmale miteinander kombiniert werden, mit denen sie im Zusammenhang gezeigt oder beschrieben sind. In den Zeichnungen zeigen:
- Fig. 1: eine Seitenansicht eines erfindungsgemäßen Dübels gemäß einer ersten Ausführungsform,
- Fig. 2: eine Draufsicht auf den Dübel der Fig. 1,
- Fig. 3: eine Seitenansicht eines konventionellen Dübels,
- Fig. 4: eine Draufsicht auf den Dübel der Fig. 3,
- Fig. 5: eine Seitenansicht eines erfindungsgemäßen Dübels gemäß einer zweiten Ausführungsform,
- Fig. 6: eine Draufsicht auf den Dübel der Fig. 5,
- Fig. 7: eine Mantelabwicklung des Dübels der Fig. 5,
- Fig. 8: eine Mantelabwicklung eines erfindungsgemäßen Dübels gemäß einer dritten Ausführungsform,
- Fig. 9: eine Mantelabwicklung eines erfindungsgemäßen Dübels gemäß einer vierten Ausführungsform,
- Fig. 10: eine Mantelabwicklung eines erfindungsgemäßen Dübels gemäß einer fünften Ausführungsform,
- Fig. 11: einen erfindungsgemäßen Dübel gemäß einer sechsten Ausführungsform im auseinandergezogenen Zustand,
- Fig. 12: den Dübel der Fig. 11 im zusammengeschobenen Zustand von schräg oben,
- Fig. 13: den Dübel der Fig. 12 in einer Seitenansicht,
- Fig. 14: den Dübel der Fig. 12 in einer Draufsicht,
- Fig. 15: den Dübel der Fig. 12 in einer Ansicht von unten,
- Fig. 16: den ersten Dübelteil des Dübels der Fig. 12 von schräg oben,
- Fig. 17: den zweiten Dübelteil des Dübels der Fig. 12 von schräg oben,
- Fig. 18, 19 und 20: Verfahrensschritte des erfindungsgemäßen Verfahrens zum Fixieren eines Dübels in einer Leichtbauplatte in schematischer Darstellung,
- Fig. 21, 22 und 23: Alternativen bei dem erfindungsgemäßen Verfahrensschritt zum Einbringen eines Sacklochs,
- Fig. 24: einen Verfahrensschritt des erfindungsgemäßen Verfahrens beim Einsetzen eines erfindungsgemäßen Dübels gemäß einer siebten Ausführungsform,
- Fig. 25: einen weiteren, auf den Verfahrensschritt der Fig. 24 folgenden Verfahrensschritt in schematischer Darstellung,
- Fig. 26: eine schematische Schnittansicht eines erfindungsgemäßen Dübels gemäß einer achten Ausführungsform,
- Fig. 27: eine schematische Schnittansicht eines erfindungsgemäßen Dübels gemäß einer neunten Ausführungsform,
- Fig. 28: eine schematische Schnittansicht eines erfindungsgemäßen Dübels gemäß einer zehnten Ausführungsform,
- Fig. 29: eine schematische Schnittansicht eines erfindungsgemäßen Dübels gemäß einer elften Ausführungsform,
- Fig. 30: eine schematische Darstellung eines erfindungsgemäßen Dübels gemäß einer zwölften Ausführungsform,
- Fig. 31: eine Mantelabwicklung eines erfindungsgemäßen Dübels gemäß einer dreizehnten Ausführungsform,
- Fig. 32 bis 38: unterschiedliche Gestaltungen von Endflächen der Finger eines ersten Dübelteils und der gegenüberliegenden Anschlagflächen eines zweiten Dübelteils,
- Fig. 39 bis 44: unterschiedliche Gestaltungen der Endflächen der Finger oder Anschlagflächen gemäß der Erfindung,
- Fig. 45 bis 48: unterschiedliche Gestaltungen der Endflächen der Finger und der gegenüberliegenden Anschlagflächen des jeweils anderen Dübelteils,
- Fig.49: eine weitere Möglichkeit der Gestaltung der Endflächen der Finger und der gegenüberliegenden Anschlagflächen des jeweils anderen Dübelteils in einem ersten Zustand und
- Fig. 50: den Finger und die Anschlagfläche der Fig. 49 in einem zweiten, zusammengeschobenen Zustand.

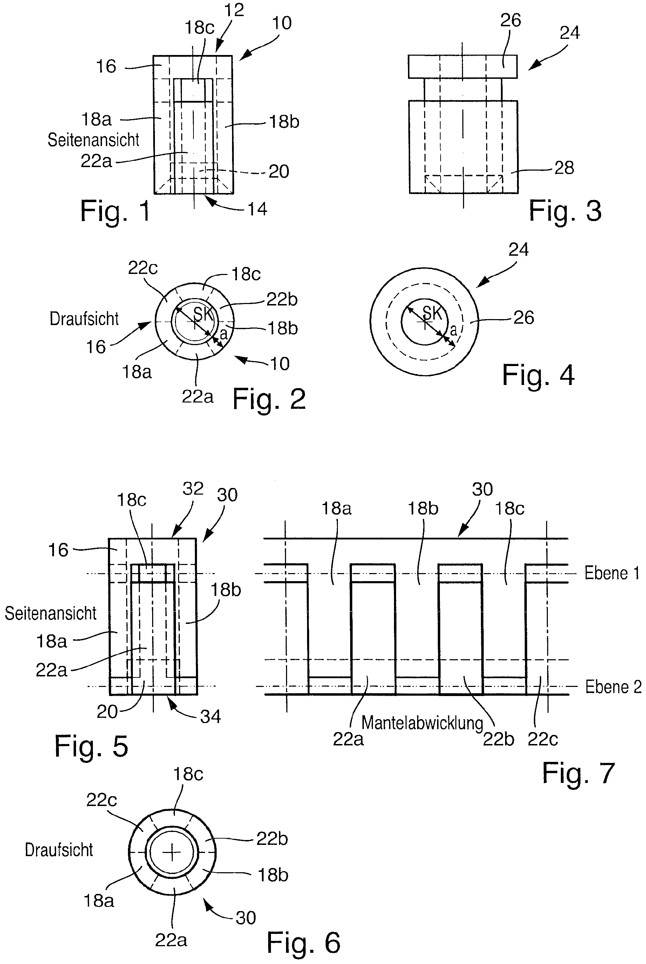

Fig. 1 zeigt eine Seitenansicht eines erfindungsgemäßen Dübels 10 gemäß einer ersten Ausführungsform der Erfindung. Der Dübel weist ein erstes Dübelteil 12 und ein zweites Dübelteil 14 auf, die ineinandergesteckt sind und sich zu einem zylindrischen Dübel ergänzen. Der erste Dübelteil 12 weist einen ringförmigen Grundkörper 16 auf, von dem insgesamt drei Finger 18a, 18b und 18c ausgehen und sich in Fig. 1 nach unten erstrecken.

Der zweite Dübelteil 14 weist einen in Fig. 1 verdeckten Grundkörper 20 auf, der in Fig. 1 lediglich gestrichelt angedeutet ist. Von dem Grundkörper 20 aus erstrecken sich insgesamt drei Finger 22a, 22b und 22c in Fig. 1 nach oben, wobei in Fig. 1 lediglich einer dieser Finger 22a erkennbar ist.

Die beiden Dübelteile 12, 14 werden ineinandergesteckt und die Finger 18a, 18b, 18c des ersten Dübelteils 12 und die Finger 22a, 22b, 22c des zweiten Dübelteils 14 ergänzen sich im zusammengesteckten Zustand zu einer kreisringförmigen Wandung des Dübels 10.

Dies ist in der Draufsicht des Dübels 10 in Fig. 2 zu erkennen. An und für sich lässt sich in der Draufsicht der Fig. 2 zwar nur der Grundkörper 16 des ersten Dübelteils 12 erkennen, die einzelnen Finger 18a bis 18c und 22a bis 22c sind aber gestrichelt angedeutet. Man erkennt durch diese gestrichelte Darstellung, dass die Finger 18a bis 18c sowie 22a bis 22c alle den gleichen Querschnitt haben und polygonale Segmente eines Kreisrings bilden. Es ist in der Darstellung der Fig. 2 dadurch erkennbar, dass die Wandstärke des Dübels 12, die durch die Wandstärke der Finger 18a bis 18c bzw. 22a bis 22c definiert ist, vergleichsweise gering ist und, wie in der Fig. 2 dargestellt ist, a beträgt. In dem Dübel 10 ist ein Schraubkanal SK vorgesehen. Der Dübel 10 weist also einen Durchmesser auf, der sich aus dem Durchmesser des Schraubkanals SK und der doppelten Wandstärke a ergibt.

Der erfindungsgemäße Dübel 10 kann dadurch gegenüber konventionellen Dübeln mit deutlich kleinerem Durchmesser ausgeführt werden.

Zum Vergleich ist in Fig. 3 ein konventioneller Dübel 24 für Leichtbauplatten dargestellt. Die Darstellung des Dübels 24 ist lediglich schematisch, entspricht von den Grundzügen her aber dem in der europäischen Patentschrift EP 2 202 505 B1 dargestellten Dübel. Der Dübel 24 weist ein erstes Dübelteil 26 und ein zweites Dübelteil 28 auf, wobei der erste Dübelteil 26 als Kolbenelement mit einem Schraubkanal SK ausgebildet ist, siehe auch Fig. 4. Dieses erste Dübelteil 26 in Form eines Kolbenelements wird in das zweite Dübelteil 28 in Form eines Hülsenelements eingesteckt. Es ist Fig. 3 und Fig. 4 ohne weiteres zu entnehmen, dass die Wandstärke des Dübels 24 dadurch 2a beträgt. Diese Wandstärke setzt sich zusammen aus der Wandstärke des Kolbenelements oder ersten Dübelteils 26 mit dem Schraubkanal SK und der Wandstärke des Hülsenelements oder des zweiten Dübelteils 28.

An einem Vergleich der Fig. 1 und 2 einerseits sowie der Fig. 3 und 4 andererseits ist sofort zu erkennen, dass der erfindungsgemäße Dübel 10 gemäß den Fig. 1 und 2 lediglich die halbe Wandstärke gegenüber dem konventionellen Dübel 24 gemäß der Fig. 3 und 4 aufweist. Dies wird bei dem erfindungsgemäßen Dübel 10 dadurch erreicht, dass das erste Dübelteil 12 und das zweite Dübelteil 14 jeweils mehrere sich parallel zu einer Längsrichtung des Dübels 10 erstreckende Finger 18a bis 18c und 22a bis 22c aufweisen. Bei der ersten Ausführungsform der Erfindung gemäß Fig. 1 und Fig. 2 ergänzen sich diese Finger 18a bis 18c und 22a bis 22c zu einem Körper mit kreisringförmigen Querschnitt.

Fig. 5 zeigt einen erfindungsgemäßen Dübel 30 gemäß einer zweiten Ausführungsform der Erfindung. Der Dübel 30 ist ähnlich zu dem Dübel 10 der Fig. 1 und 2 aufgebaut, so dass lediglich die Unterschiede zu dem Dübel 10 erläutert werden. Der Dübel 30 weist ein erstes Dübelteil 32 und ein zweites Dübelteil 34 auf, die relativ zueinander verschiebbar sind und im montagefertigen Zustand der Fig. 5 ineinandergesteckt sind. Der erste Dübelteil 32 weist einen Grundkörper 16 auf, von dem sich insgesamt drei Finger 18a, 18b und 18c aus erstrecken, in Fig. 5 nach unten. Dies ist auch der Draufsicht auf den Dübel 30 der Fig. 6 zu entnehmen, wo die einzelnen Finger der beiden Dübelteile mit gestrichelten Linien angedeutet sind.

Der zweite Dübelteil 34 weist ebenfalls einen Grundkörper 20 auf, der in Fig. 5 lediglich abschnittsweise zu erkennen ist. Dieser Grundkörper 20 ist plattenartig ausgeführt und vom Außenumfang des Grundkörpers 20 erstrecken sich drei Finger 22a, 22b, 22c aus, in Fig. 5 nach oben. Wie der Draufsicht der Fig. 6 zu entnehmen ist, weisen die Finger 18a bis 18c des ersten Dübelteils 32 und die Finger 22a bis 22c des zweiten Dübelteils wie bei dem Dübel 10 der Fig. 1 und 2 jeweils einen Querschnitt in Form eines Kreisringsegments auf und ergänzen sich im ineinandergesteckten Zustand des ersten Dübelteils 32 und des zweiten Dübelteils 34 zu einem Querschnitt in Form eines Kreisrings.

Es ist Fig. 5 zu entnehmen, dass ausgehend von der dargestellten Stellung das erste Dübelteil 32 noch ein Stück weiter in Richtung auf das zweite Dübelteil 34 zu nach unten geschoben werden könnte, bis das obere freie Ende des Fingers 22a an der Unterseite des Grundkörpers 16 des ersten Dübelteils 32 anliegt. In gleicher Weise liegen dann die freien Enden der Finger 22b, 22c an der Unterseite des Grundkörpers 16 des ersten Dübelteils 32 an und die freien Enden der Finger 18a, 18b, 18c des ersten Dübelteils 32 lägen dann am Grund eines Lochs an, das in eine Leichtbauplatte eingebracht wurde. Wird der Dübel 30 dann von der Oberseite des Grundkörpers 16 des ersten Dübelteils 32 her mit Ultraschallenergie beaufschlagt, wird das thermoplastische Material des Dübels 30 unter anderem im Bereich der Kontaktstellen der Finger 22a, 22b, 22c mit dem Grundkörper 16 des ersten Dübelteils 32 erwärmt und in pastösen Zustand gebracht bzw. verflüssigt und das thermoplastische Material des Dübels 30 dringt infolgedessen in die erste Deckschicht, in die zweite Deckschicht und/oder in die Kernschicht ein. Dies geschieht auch im Bereich der Kontaktstellen der freien Enden der Finger 18a, 18b, 18c mit dem Grund des Lochs in der Leichtbauplatte. Nach dem Abschalten der Ultraschallenergie erkaltet und verfestigt sich das thermoplastische Material wieder und zwischen dem Dübel 30 und der Leichtbauplatte kann ein Stoffschluss und/oder Formschluss erzielt werden.

Fig. 7 zeigt eine Abwicklung des Mantels des Dübels 30 der Fig. 5. Gut zu erkennen sind in dieser Ansicht die Finger 18a, 18b, 18c des ersten Dübelteils 32 und die Finger 22a, 22b, 22c des zweiten Dübelteils 34, die so ineinandergreifen, dass die Seitenflächen benachbarter Finger aneinander anliegen.

Ebenfalls eingezeichnet sind in Fig. 7 zwei Ebenen, Ebene 1 und Ebene 2. Im Bereich der Ebene 1 kontaktieren die freien Enden der Finger 22a, 22b, 22c des zweiten Dübelteils 34 die Unterseite des Grundkörpers 16 des ersten Dübelteils, vgl. Fig. 1, und im Bereich der Ebene 1 wird sich beim Einbringen von Ultraschallenergie infolgedessen das thermoplastische Material des Dübels 30 verflüssigen und ein Formschluss und/oder Stoffschluss mit einer Leichtbauplatte sowie ein Stoffschluss zwischen dem ersten Dübelteil 32 und dem zweiten Dübelteil 34 kann hergestellt werden. In gleicher Weise berühren im Bereich der Ebene 2 die freien Enden der Finger 18a, 18b, 18c des ersten Dübelteils 32 den Grund eines Lochs in einer Leichtbauplatte. Beim Einleiten von Ultraschallenergie verflüssig sich das thermoplastische Material des Dübels 30 dann auch in diesem Bereich und ein Formschluss und/oder Stoffschluss mit der Leichtbauplatte kann im Bereich der Ebene 2 hergestellt werden.

Die Ebene 1 wird vorteilhaft so angeordnet, dass sie kurz unterhalb der oberen Deckschicht einer Leichtbauplatte liegt, so dass durch das verflüssigte und wieder verfestigte Material des Dübels 30, das ein Stück weit in die Kernschicht am Übergang zwischen der oberen Deckschicht und der Kernschicht eindringt, ein Hinterschnitt zur oberen Deckschicht erzielt werden kann.

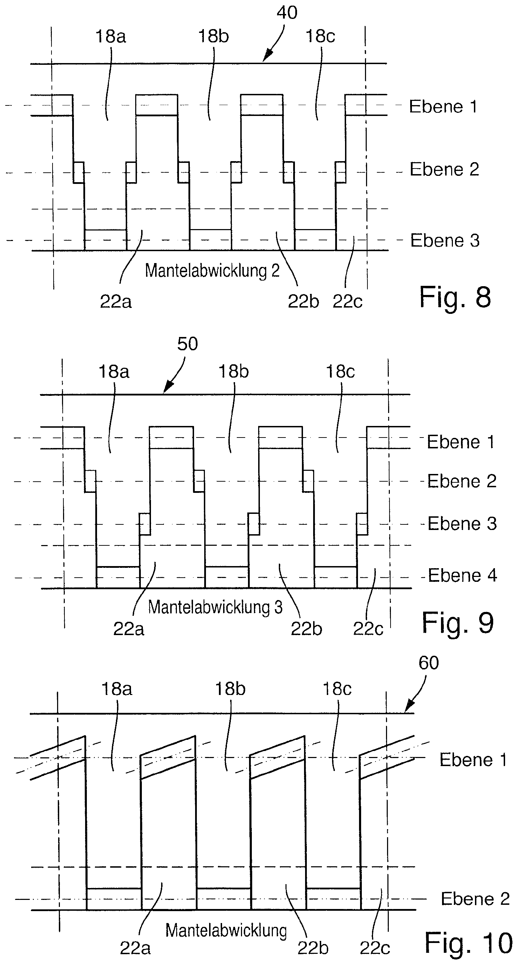

Fig. 8 zeigt eine Mantelabwicklung eines erfindungsgemäßen Dübels 40 gemäß einer dritten Ausführungsform der Erfindung. Im Unterschied zu dem Dübel 30 der Fig. 5 bis 7 sind die Finger 18a, 18b, 18c des ersten Dübelteils und die Finger 22a, 22b, 22c des zweiten Dübelteils in Längsrichtung des Dübels 40 gestuft ausgebildet, wobei die Stufen der Finger 18a bis 18c auf gleicher Höhe liegen und die beidseitigen Stufen der Finger 22a bis 22c ebenfalls auf gleicher Höhe liegen. Beim Zusammenschieben der beiden Dübelteile des Dübels 40 ergeben sich dadurch drei Ebenen, in Fig. 8 Ebene 1, Ebene 2 und Ebene 3, in denen in den Dübel 40 eingeleitete Ultraschallenergie zu einer Verflüssigung des thermoplastischen Materials des Dübels und dadurch zu einem Formschluss und/oder Stoffschluss zwischen den beiden Dübelteilen sowie mit der Leichtbauplatte führt. In Fig. 8 ist die zusätzliche Ebene die Ebene 2, die mittig zwischen der Ebene 1 und der Ebene 3 angeordnet ist. In der Ebene 2 treffen die Stufen an den beiden Seitenflächen der Finger 18a, 18b und 18c mit den Stufen an den Seitenflächen der Finger 22a, 22b und 22c zusammen. Die mittige Ebene 2 liegt im Bereich der Kernschicht einer Leichtbauplatte. Auf diese Weise kann ein Stoffschluss und/oder Formschluss auch mit einem geeigneten Material einer Kernschicht einer Leichtbauplatte erzielt werden. Darüber hinaus sorgen die Stufen an den Fingern 18a bis 18c und an den Finger 22a bis 22c auch für eine definierte Länge des Dübels 40 im vollständig zusammengeschobenen Zustand.

Fig. 9 zeigt eine Mantelabwicklung eines erfindungsgemäßen Dübels 50 gemäß einer vierten Ausführungsform der Erfindung. Im Unterschied zu dem Dübel 40 der Fig. 8 sind die Seitenflächen der Finger 18a, 18b, 18c des ersten Dübelteils und die Finger 22a, 22b, 22c des zweiten Dübelteils so gestuft ausgebildet, dass die Stufen in zwei unterschiedlichen Ebenen, Ebene 2 und Ebene 3, aufeinanderstoßen. Hierzu sind die Stufen der Finger 18a bis 18c und 22a bis 22c in Längsrichtung des Dübels 50 zueinander versetzt. Die in Fig. 9 jeweils rechten Stufen der Finger 18a, 18b, 18c sind auf der Ebene 3 und damit tiefer angeordnet als die jeweils linken Stufen der Finger 18a, 18b, 18c, die auf der Ebene 2 angeordnet sind.

Nach dem vollständigen Zusammenschieben der beiden Dübelteile des Dübels 50 und dem Einleiten von Ultraschallenergie verflüssigt sich das thermoplastische Material des Dübels 50 somit auch im Bereich von vier Ebenen, nämlich Ebene 1, Ebene 2, Ebene 3 und Ebene 4, so dass nach dem Erkalten des Materials ein Stoffschluss und/oder Formschluss auf vier unterschiedlichen Ebenen bzw. Höhen der Leichtbauplatte erzielbar ist.

Fig. 10 zeigt eine Mantelabwicklung eines erfindungsgemäßen Dübels 60 gemäß einer fünfen Ausführungsform der Erfindung. Die Finger 18a, 18b, 18c des ersten Dübelteils sind dabei gleich ausgebildet wie die Finger des Dübels 30 der Fig. 5 bis 7 und weisen an ihrem jeweiligen freien Ende eine Endfläche auf, die parallel zum Umfang des Dübels 60 verläuft. Die Finger 22a, 22b und 22c des zweiten Dübelteils sind hingegen an ihren freien Enden abgeschrägt, so dass die Endfläche der Finger 22a, 22b, 22c in der Mantelabwicklung der Fig. 10 von links nach rechts ansteigend verläuft. Die entsprechenden Gegenflächen am Grundkörper des ersten Mantelteils sind ebenfalls in der Mantelabwicklung der Fig. 10 von links nach rechts ansteigend ausgeführt. Ein Kontakt der Endflächen der Finger 22a, 22b, 22c mit dem Grundkörper des ersten Dübelteils erfolgt dadurch nicht exakt in der Ebene 1, sondern schräg verlaufend zur Ebene 1 und die Ebene 1 mittig schneidend. Dadurch erfolgt auch ein Formschluss oder Stoffschluss beim Fixieren des Dübels in der Leichtbauplatte nicht nur exakt auf Höhe der Ebene 1, sondern auch im Bereich darüber und darunter. Dadurch können in sehr einfacher Weise Toleranzen der Leichtbauplatte und/oder des Dübels 60 kompensiert werden. Die freien Enden der Finger 18a, 18b, 18c sind bei dem Dübel 60 senkrecht zur Längsachse des Dübels verlaufend ausgebildet, da diese beim Fixieren des Dübels in Kontakt mit dem Boden eines Sacklochs in der Leichtbauplatte kommen.

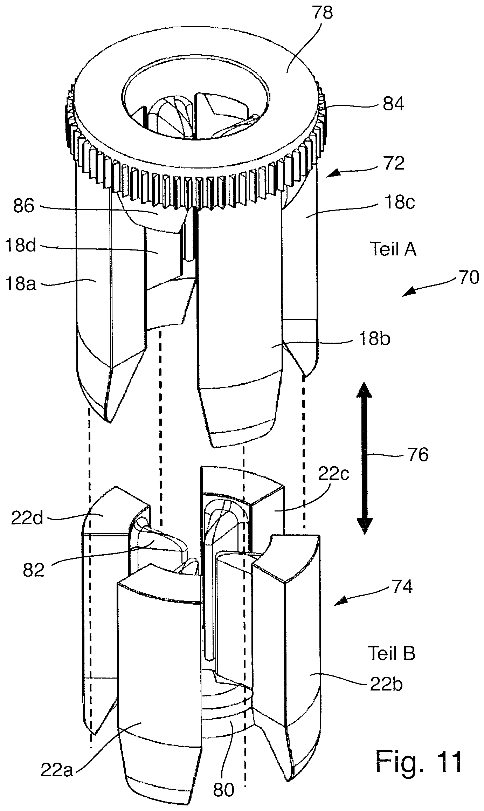

Fig. 11 zeigt einen erfindungsgemäßen Dübel 70 gemäß einer sechsten Ausführungsform der Erfindung im auseinandergezogenen Zustand. Der Dübel 70 weist ein erstes Dübelteil 72 und ein zweites Dübelteil 74 auf, die, wie durch einen Doppelpfeil 76 angedeutet ist, ineinandergesteckt und wieder auseinandergezogen werden können.

Das erste Dübelteil 72 weist einen kreisringscheibenförmigen Grundkörper 78 auf, von dem insgesamt vier Finger 18a, 18b, 18c und 18d ausgehen und sich in Fig. 11 nach unten erstrecken. Jeder der Finger 18a bis 18d weist über einen Teil seiner Länge im Querschnitt eine Kreisringsegmentform auf.

Der zweite Dübelteil 74 weist einen kreisringscheibenförmigen Grundkörper 80 auf, von dem aus sich insgesamt vier Finger 22a, 22b, 22c und 22d nach oben erstrecken. Jeder der Finger 22a bis 22d weist über einen Abschnitt seiner Länge einen Querschnitt in Form eines Kreisringsegments auf. Die beiden Dübelteile 72, 74 können ineinandergesteckt werden gemäß dem Pfeil 76, so dass sich die Finger 18a bis 18d und die Finger 22a bis 22d dann zu einer zylindrischen Wandung ergänzen.

Jeder der Finger 18a bis 18d und jeder der Finger 22a bis 22d ist auf seiner radial innenliegenden Seite mit einem Vorsprung 82 versehen, wobei sich diese Vorsprünge 82 jeweils über den Großteil der Länge der Finger 18a bis 18d bzw. 22a bis 22d erstrecken. Die Vorsprünge 82 sind im Querschnitt dreieckförmig mit abgerundeter oder gekappter Spitze. Die Vorsprünge 82 bilden im zusammengeschobenen Zustand der beiden Dübelteile 72, 74 einen Schraubkanal, der parallel zur Längsachse des Dübels 70 verläuft. Die Längsachse verläuft in der Darstellung der Fig. 11 parallel zum Pfeil 76 durch die Mitte des ersten Dübelteils 72 und des zweiten Dübelteils 74.

Der Grundkörper 78 des ersten Dübelteils 72 ist an seinem Außenumfang mit zahlreichen kleinen in Längsrichtung verlaufenden Vorsprüngen 84 versehen. Beim Fixieren des Dübels in einer Leichtbauplatte greifen diese Vorsprünge 84 an der Innenwand eines Lochs in der Leichtbauplatte im Bereich von deren Deckschicht an. Beim Einleiten von Ultraschallenergie erwärmt und verflüssigt sich das Material der Vorsprünge 84 oder wird zumindest in einen pastösen Zustand versetzt. Das Material der Vorsprünge 84 sorgt dann für einen Formschluss und/oder Stoffschluss mit dem Material der Leichtbauplatte, insbesondere mit dem Material der Deckschicht der Leichtbauplatte.

An einer Unterseite des Grundkörpers 78 sind zwischen den Fingern 18a bis 18d jeweils sich in Richtung nach unten verjüngende Vorsprünge 86 vorgesehen. Diese Vorsprünge 86 gelangen beim Zusammenschieben der beiden Dübelteile 72, 74 in Kontakt mit den Oberseiten der Finger 22a bis 22d des zweiten Dübelteils 74. Beim Einleiten von Ultraschallenergie richten diese sich verjüngenden Vorsprünge 86 dadurch die Ultraschallenergie auf den Kontaktbereich zwischen den Vorsprüngen 86 und den Fingern 22a bis 22d aus, so dass sich das thermoplastische Material des Dübels 70 in diesen Kontaktbereichen erwärmt und verflüssigt bzw. zumindest in einen pastösen Zustand gelangt. Beim Fixieren des Dübels 70 kann dadurch ein Stoffschluss zwischen den beiden Dübelteilen 72, 74 und gegebenenfalls zusätzlich noch ein Stoffschluss und/oder Formschluss mit dem Material der Leichtbauplatte erzielt werden.

Die freien Enden der Finger 18a bis 18d verjüngen sich und laufen jeweils in einer Kante aus, die parallel zur Umfangsrichtung und senkrecht zur Längsrichtung liegt. Mit dieser Kante wird der Boden eines Sacklochs in der Leichtbauplatte beim Fixieren des Dübels kontaktiert und beim Einleiten von Ultraschallenergie wird die Ultraschallenergie in den Bereich dieser Kante eingeleitet, so dass auch im Bereich dieser Kante eine Erwärmung und Verflüssigung bzw. Erzeugung eines pastösen Zustands des thermoplastischen Materials und infolgedessen ein Stoffschluss und/oder Formschluss mit dem Material der Leichtbauplatte erfolgen kann.

In gleicher Weise sind auch die untenliegenden freien Enden der Finger 22a bis 22d des zweiten Dübelteils 74, die noch unterhalb des Grundkörpers 80 liegen, verjüngt ausgeführt und laufen in einer Kante aus, die parallel zur Umfangsrichtung und senkrecht zur Längsrichtung des Dübels 70 verläuft. Im Bereich dieser Kante bzw. dieser Kanten berühren die Finger 22a bis 22d den Grund eines Lochs in der Leichtbauplatte, und nach dem Einleiten von Ultraschallenergie und dem Verfestigen des thermoplastischen Materials wird auch in diesen Bereichen ein Stoffschluss und/oder Formschluss mit dem Material der Leichtbauplatte erfolgen. Die Ultraschallenergie wird dabei von der Oberseite des Grundkörpers 78 des ersten Dübelteils her eingeleitet und über die sich verjüngenden Vorsprünge 86 auf der Unterseite des Grundkörpers 78 in die Finger 22a bis 22d eingeleitet und dann weiter auf die untenliegenden sich verjüngenden Enden der Finger 22a bis 22d übertragen.

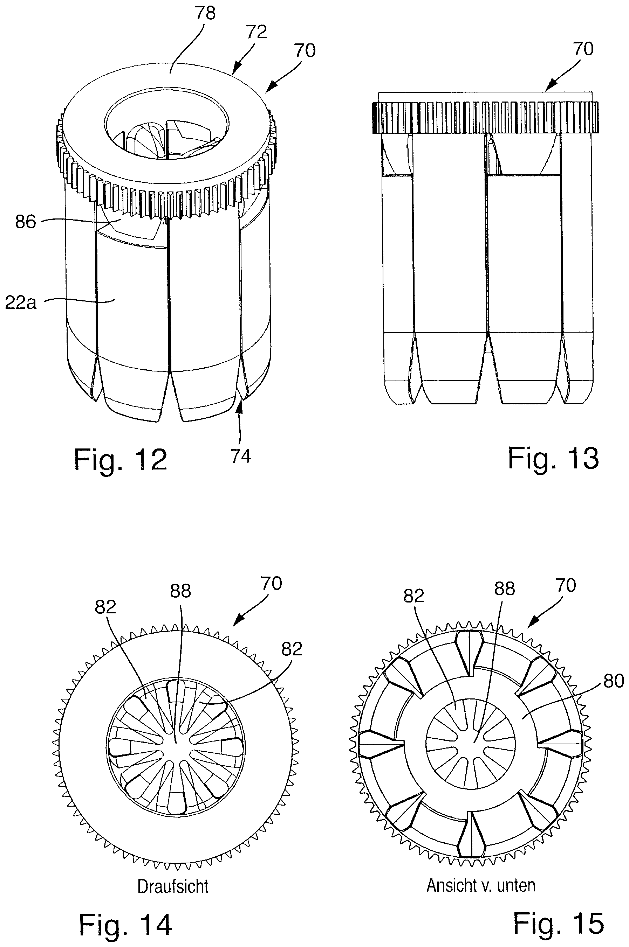

Fig. 12 zeigt den Dübel 70 der Fig. 11 im zusammengeschobenen Zustand der beiden Dübelteile 72, 74. Zu erkennen ist, dass die Vorsprünge 86 an der Unterseite des Grundkörpers 78 des ersten Dübelteils 72 nun an den oberen freien Enden der Finger 22a bis 22d des zweiten Dübelteils 74 anliegen und dass die Kanten am unteren Ende der Finger 18a bis 18d und der Finger 22a bis 22d auf gleicher Höhe liegen.

Fig. 13 zeigt den Dübel 70 der Fig. 11 und 12 in einer Seitenansicht.

Fig. 14 zeigt den Dübel 70 in einer Draufsicht. In der Draufsicht ist der Schraubkanal 88 zu erkennen, der parallel zur Mittellängsachse des Dübels 70 verläuft und der durch die radial nach innen ragenden Vorsprünge 82 der Finger 18a bis 18d und der Finger 22a bis 22d gebildet ist, vgl. Fig. 11.

Fig. 15 zeigt eine Ansicht des Dübels 70 von unten. Auch in dieser Ansicht ist der durch die Vorsprünge 82 gebildete Schraubkanal 88 gut zu erkennen. Zu erkennen ist in dieser Ansicht auch der Grundkörper 80 des zweiten Dübelteils 74.

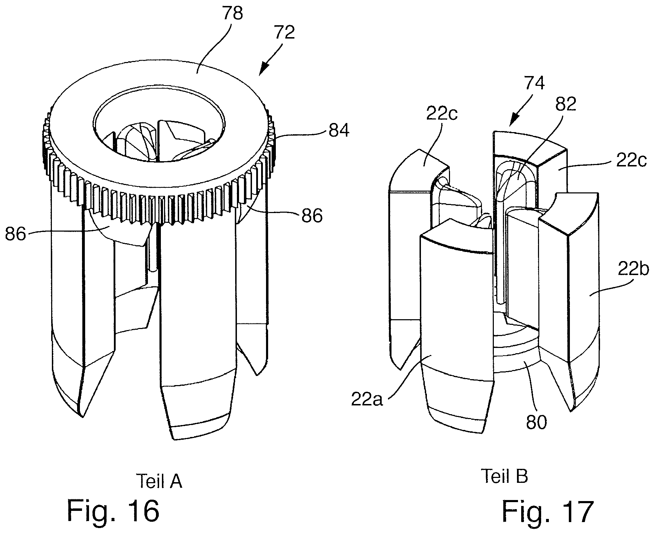

Fig. 16 zeigt das erste Dübelteil 72 in einer Ansicht von schräg oben und Fig. 17 das zweite Dübelteil 74 in einer Ansicht von schräg oben. Fig. 17 lässt gut die Anbindung der Finger 22a bis 22c an den Grundkörper 80 des zweiten Dübelteils 74 erkennen. Der Grundkörper 80 ist kreisringförmig ausgebildet. Die Vorsprünge 82 an den radial gelegenen Innenseiten der Finger 22a bis 22c sind mit dem Grundkörper 80 verbunden und ragen ein Stück weit über die Innenöffnung des Grundkörpers 80 hinaus.

Vorzugsweise sind die Dübelteile 72, 74 einstückig aus einem thermoplastischen Kunststoff gebildet, insbesondere im Kunststoffspritzverfahren Der erfindungsgemäße Dübel kann auch in einem zwei-Komponenten-Spritzgußverfahren, einem sogenannten Overmoulding Spritzgußverfahren aus gleichen oder unterschiedlichen Materialien oder Werkstoffen hergestellt werden. Mit solchen Verfahren kann beispielsweise erreicht werden, dass das erste Dübelteil und das zweite Dübelteil leicht aneinanderhaften und vor der Montage nicht montiert beziehungsweise zusammengesteckt werden müssen. Bei Beaufschlagung mit Ultraschallenergie lösen sich das erste und das zweite Dübelteil wieder leicht voneinander und sind dann relativ zueinander verschiebbar.

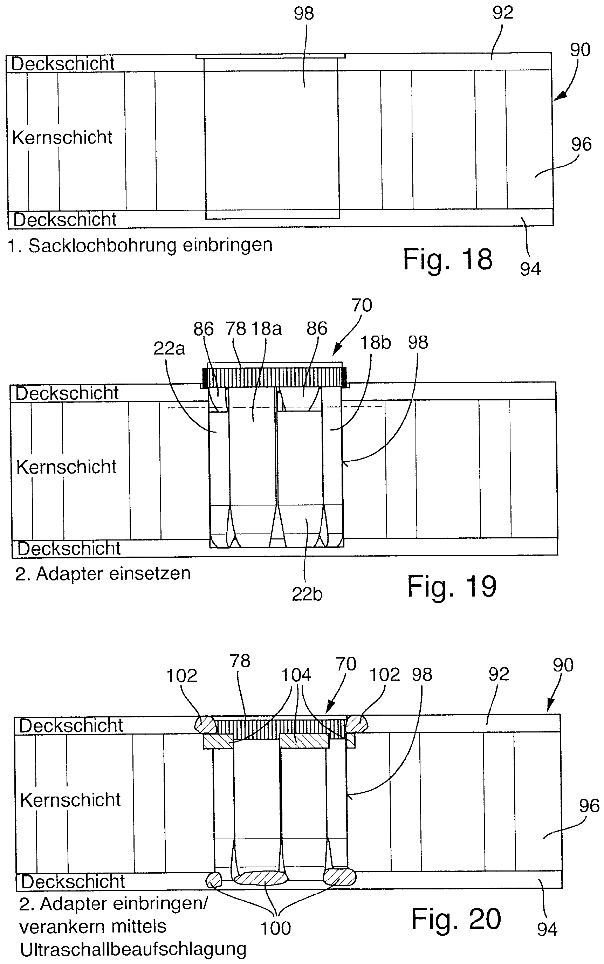

Fig. 18 bis 20 zeigen Verfahrensschritte des erfindungsgemäßen Verfahrens beim Fixieren des erfindungsgemäßen Dübels 70 in einer Leichtbauplatte 90. Die Leichtbauplatte 90 weist eine erste Deckschicht 92 aus kompaktem drucksteifem Material und eine zweite, untere Deckschicht 94 aus ebenfalls kompaktem, drucksteifem Material auf. Zwischen den beiden Deckschichten 92, 94 ist eine Kernschicht 96 aus Material mit gegenüber den Deckschichten geringerer Dichte vorgesehen. Die Kernschicht weist gegenüber den Deckschichten 92, 94 eine wesentlich größere Dicke auf, bei der dargestellten Ausführungsform der Leichtbauplatte etwa die achtfache Dicke einer Deckschicht 92, 94. Die Kernschicht kann aus Papierwaben, Schaumstoff oder auch Vollholz geringer Dichte bestehen, beispielsweise Balsaholz.

In die Leichtbauplatte 90 wird von der Seite der in Fig. 18 oberen, ersten Deckschicht 92 her ein Sackloch 98 eingebracht. Das Sackloch 98 erstreckt sich vollständig durch die erste Deckschicht 92 und die Kernschicht 96 hindurch. Von der obenliegenden Innenseite der unteren, zweiten Deckschicht 94 her erstreckt sich das Sackloch lediglich ein Stück weit in die zweite Deckschicht 94 hinein.

Von der Oberseite der ersten Deckschicht 92 her ist der Durchmesser des Sacklochs 98 etwas vergrößert, so dass ein flacher Bereich mit gegenüber dem übrigen Sackloch 98 größerem Durchmesser entsteht. Dieser größere Durchmesser ist auf den Außendurchmesser der Vorsprünge 84 am ersten Dübelteil 72 ausgelegt, vgl. Fig. 11.

Gemäß Fig. 19 wird der erfindungsgemäße Dübel 70 nun in das Sackloch 98 eingeführt, bis die freien Enden der Finger 18a, 18b, 18c und 18d am Grund des Sacklochs 98 anliegen. Die unteren Enden der Finger 22a, 22b liegen ebenfalls am Grund des Sacklochs auf. Die unteren freien Enden der Vorsprünge 86, die vom Grundkörper 78 des ersten Dübelteils 72 ausgehen, vgl. Fig. 11, liegen auf den oberen freien Enden der Finger 22a, 22b, 22c, 22d des zweiten Dübelteils 74 auf.

Ausgehend vom Zustand der Fig. 19 wird nun die Oberseite des ersten Dübelteils, also die Oberseite des Grundkörpers 78 des ersten Dübelteils, mit Ultraschallenergie beaufschlagt. Das thermoplastische Material des Dübels wird nun an den Kontaktstellen des Dübels 70 mit dem Material der beiden Deckschichten 92, 94 stark erwärmt und verflüssigt bzw. zumindest in einen pastösen Zustand gebracht. Dies sind die Bereiche, in denen die freien unteren Enden der Finger 18a, 18b, 18c, 18d den Grund des Sacklochs berühren und die Bereiche, in denen die unteren Enden der Finger 22a, 22b, 22c, 22d ebenfalls den Grund des Sacklochs 98 berühren. In diesen Bereichen wird sich ein Formschluss und/oder Stoffschluss zwischen dem Dübel 70 und dem Material der zweiten Deckschicht 94 ausbilden. Diese Bereiche sind in Fig. 20 schematisch mit dem Bezugszeichen 100 bezeichnet.

Darüber hinaus wird sich das Material des Dübels 70 im Bereich der Vorsprünge 84 am Außenumfang des Grundkörpers 78 stark erwärmen und verflüssigen bzw. in einen pastösen Zustand gelangen. In diesem Bereich erfolgt eine stoffschlüssige und/oder formschlüssige Verbindung mit dem Material der ersten Deckschicht 92. Diese Bereiche sind in Fig. 20 mit dem Bezugszeichen 102 bezeichnet.

Darüber hinaus wird sich das thermoplastische Material der Vorsprünge 86 des ersten Dübelteils an der Kontaktstelle der Vorsprünge 86 mit den freien Enden der Finger 22a, 22b, 22c und 22d stark erwärmen und verflüssigen bzw. in einen pastösen Zustand gelangen. In diesem Zustand erfolgt eine stoffschlüssige Verbindung zwischen dem ersten Dübelteil 72 und dem zweiten Dübelteil 74 sowie gegebenenfalls zusätzlich eine formschlüssige und/oder stoffschlüssige Verbindung mit dem Material der Kernschicht 96 der Leichtbauplatte 90. Diese Bereiche sind in Fig. 20 mit dem Bezugszeichen 104 bezeichnet. Es ist anhand der Darstellung der Fig. 20 zu erkennen, dass die Bereiche 104 einen Hinterschnitt der ersten Deckschicht 92 ausbilden. Dadurch kann eine erhöhte Festigkeit bzw. stabilere Fixierung des Dübels 70 in der Leichtbauplatte 90 erfolgen.

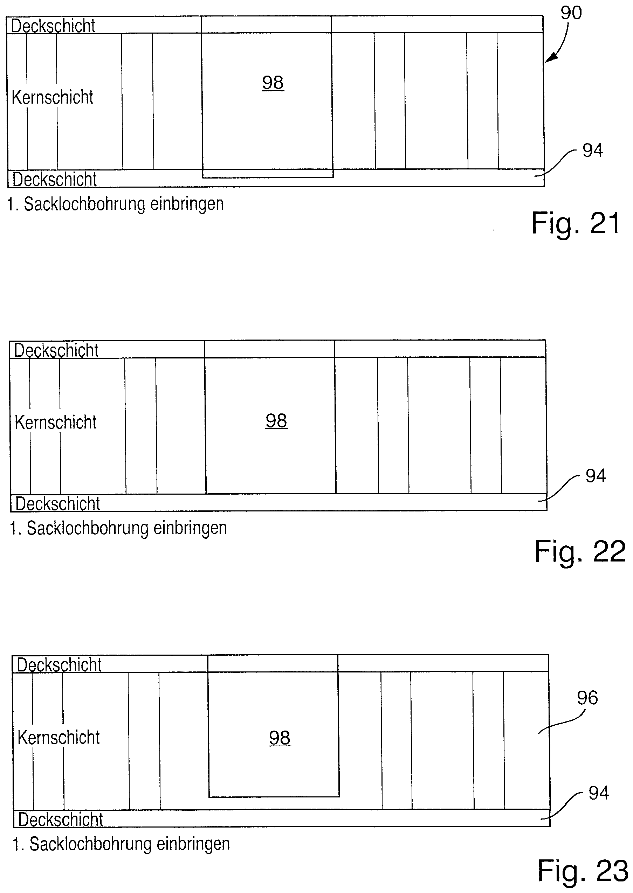

Die Fig. 21 bis 23 zeigen alternative Gestaltungen eines Sacklochs 98 in der Leichtbauplatte 90. In der Darstellung der Fig. 21 erstreckt sich das Sackloch 98 noch ein Stück weit in die untere Deckschicht 94 der Leichtbauplatte 90 hinein, ohne diese aber vollständig zu durchsetzen.

In der Darstellung der Fig. 22 endet das Sackloch 98 an der Innenseite der zweiten bzw. unteren Deckschicht 94.

In der Darstellung der Fig. 23 endet das Sackloch 98 noch in der Kernschicht 96. Der erfindungsgemäße Dübel kann in Sacklöcher 98 unterschiedlicher Ausbildung eingesetzt werden, speziell in Sacklöcher 98 gemäß Fig. 18, Fig. 21, Fig. 22 oder Fig. 23. Die Ausbildung des Sacklochs gemäß Fig. 23 wird üblicherweise gewählt, wenn die Kernschicht 96 aus stabilerem Material besteht, beispielsweise aus leichtem Vollholz, insbesondere Balsaholz.

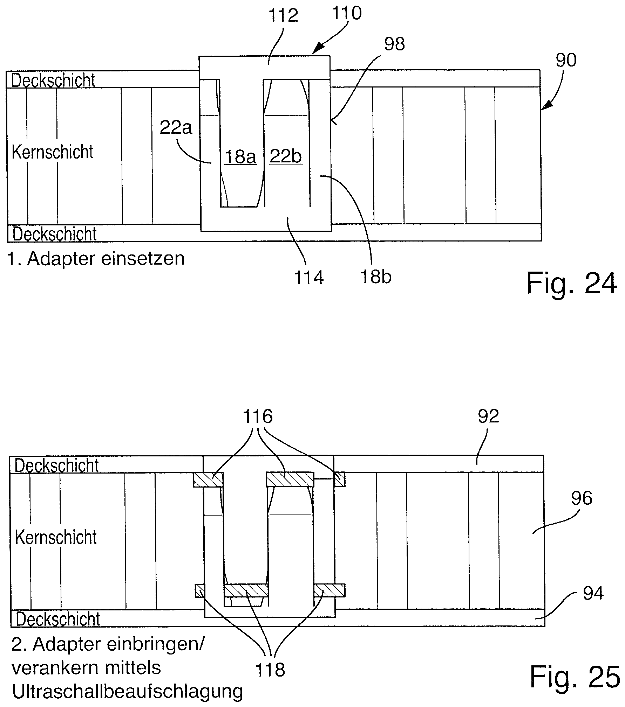

Fig. 24 zeigt einen erfindungsgemäßen Dübel 110 gemäß einer weiteren Ausführungsform der Erfindung. Der Dübel 110 weist zwei identisch zueinander ausgebildete Dübelteile 112, 114 auf. Die Dübelteile 112, 114 sind dabei gleich ausgebildet wie das erste Dübelteil 72, das in Fig. 16 dargestellt ist, mit der Ausnahme, dass die Vorsprünge 84 am Außenumfang des Grundkörpers 78 und die Vorsprünge 86 an der Unterseite des Grundkörpers 78 weggelassen wurden.

Wird der Dübel 110 nun, wie in Fig. 24 dargestellt ist, in ein Sackloch 98 in der Leichtbauplatte 90 eingebracht und dann, siehe Fig. 25, mit Ultraschallenergie von der Oberseite des Dübels 110 her beaufschlagt, so wird sich das thermoplastische Material des Dübels 110 lediglich im Bereich der Kontaktstellen zwischen den freien Enden der Finger 18a, 18b, 18c, 18d mit dem Grundkörper des zweiten Dübelteils 114 und in den Kontaktbereichen der freien Enden der Finger 22a, 22b, 22c, 22d mit dem Grundkörper des ersten Dübelteils 112 erwärmen und verflüssigen bzw. in einen pastösen Zustand gelangen.

Dadurch wird sich einerseits das erste Dübelteil 112 mit dem zweiten Dübelteil 114 in diesen Bereichen stoffschlüssig verbinden, die in Fig. 25 mit den Bezugszeichen 116 bzw. 118 bezeichnet sind. Die Bereiche 116 bilden aber gleichzeitig, wie Fig. 25 zu entnehmen ist, Hinterschnitte an der ersten Deckschicht 92 aus. Die Bereiche 118 bilden Hinterschnitte mit dem Material der Kernschicht 96 aus. Im Bereich der Hinterschnitte der Bereiche 116, 118 kann nicht nur ein Formschluss, sondern gegebenenfalls zusätzlich ein Stoffschluss mit dem Material der ersten Deckschicht 92 und dem Material der Kernschicht 96 bzw. im Falle der Bereiche 118 nicht nur ein Formschluss, sondern auch ein Stoffschluss mit dem Material der Kernschicht 96 erreicht werden.

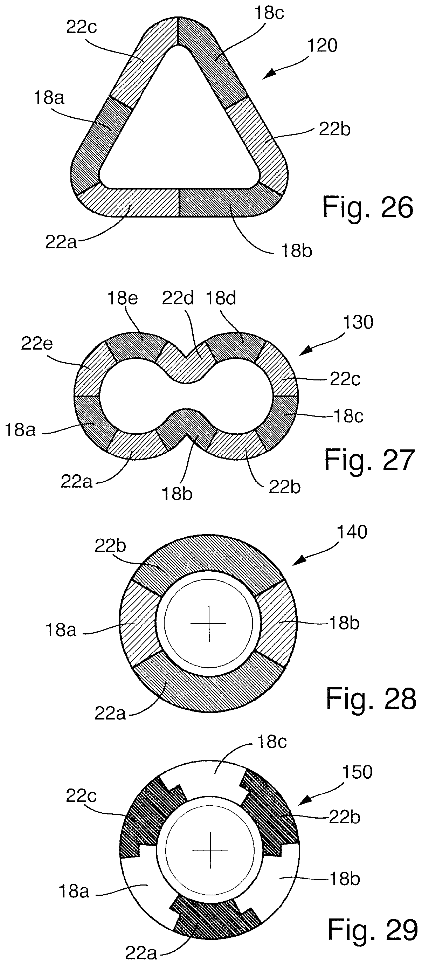

Fig. 26 zeigt schematisch den Querschnitt eines erfindungsgemäßen Dübels 120 gemäß einer weiteren Ausführungsform der Erfindung. Der Dübel 120 ist ringförmig ausgebildet und hat den Querschnitt eines Dreiecks mit abgerundeten Ecken. Die Wandung des Dübels 120 wird durch Ringsegmente ausgebildet, und durch jeweils drei Finger 18a, 18b, 18c des ersten Dübelteils und drei Finger 22a, 22b, 22c des zweiten Dübelteils gebildet. Ein passendes Sackloch für den Dübel 120 kann aufgrund der abgerundeten Ecken beispielsweise mittels eines Fräsers hergestellt werden.

Fig. 27 zeigt schematisch den Querschnitt eines weiteren erfindungsgemäßen Dübels 130. Der Dübel 130 weist die Querschnittsform einer liegenden acht auf. Ein hohler Innenraum des Dübels 130 weist ebenfalls die Form einer liegenden acht auf. Die Wandung des Dübels 130 wird durch fünf Finger 18a, 18b, 18c, 18d und 18e eines ersten Dübelteils und fünf Finger 22a, 22b, 22c, 22d und 22e eines zweiten Dübelteils gebildet, wobei die Seitenflächen benachbarter Finger 18a bis 18e und 22a bis 22e aneinander anliegen.

Fig. 28 zeigt schematisch einen Querschnitt eines weiteren erfindungsgemäßen Dübels 140. Der Dübel 140 unterscheidet sich von dem Dübel 30 der Fig. 5 bis 7 lediglich dadurch, dass der erste Dübelteil nur zwei Finger 18a, 18b aufweist und der zweite Dübelteil ebenfalls nur zwei Finger 22a, 22b aufweist. Die Finger 18a, 18b und 22a, 22b bilden im Querschnitt jeweils Kreisringsegmente. Die Finger 22a, 22b erstrecken sich über den Umfang gesehen aber über eine größere Länge als die Finger 18a, 18b.

Fig. 29 zeigt einen Querschnitt eines weiteren erfindungsgemäßen Dübels 150. Die Schnittebene in Fig. 29 liegt senkrecht zur Längsachse des Dübels 150. Der Dübel 150 weist einen kreisringförmigen Querschnitt auf, der durch drei Finger 18a, 18b, 18c eines ersten Dübelteils und drei Finger 22a, 22b, 22c eines zweiten Dübelteils gebildet ist. Die Seitenflächen benachbarter Finger 18a bis 18c und 22a bis 22c liegen aneinander an. Die Seitenflächen der Finger 18a bis 18c und 22a bis 22c sind in radialer Richtung gestuft ausgebildet. Dadurch sind die Finger 18a bis 18c und 22a bis 22c in Längsrichtung des Dübels 150 aneinandergeführt und können in radialer Richtung nicht oder lediglich geringfügig ausweichen.

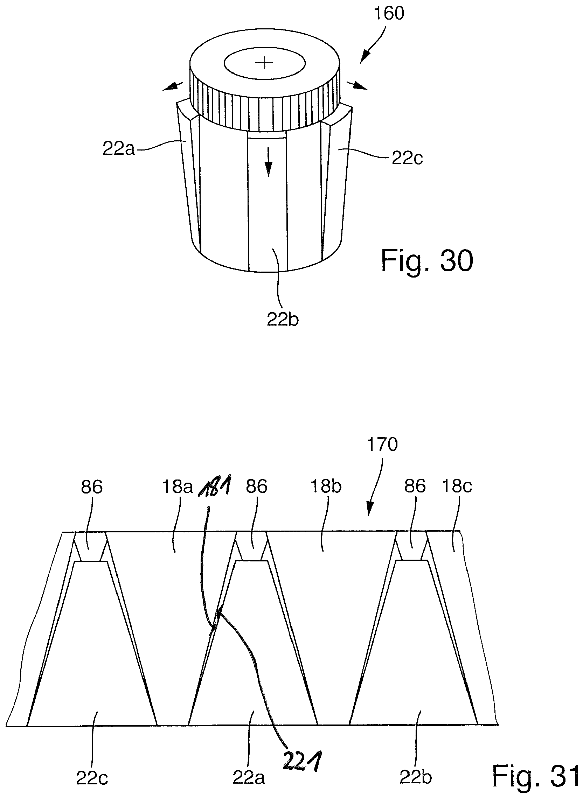

Fig. 30 zeigt schematisch einen weiteren erfindungsgemäßen Dübel 160 in einer Ansicht von schräg oben. Die freien Enden der Finger des zweiten Dübelteils bzw. die Unterseite des Grundkörpers des ersten Dübelteils sind dabei so ausgebildet, dass sich die freien Enden der Finger 22a, 22b, 22c des zweiten Dübelteils beim Zusammenschieben der beiden Dübelteile radial nach außen aufspreizen. Auch dadurch kann ein Hinterschnitt an der ersten Deckschicht einer Leichtbauplatte erzielt werden. Alternativ oder zusätzlich können auch die Seitenflächen der Finger so ausgebildet sein, dass beim Zusammenschieben der beiden Dübelteile eine radiale Aufspreizung des Dübels erfolgt. Die Gestaltung der Seitenflächen der Finger ist unabhängig von der Gestaltung der Endflächen der Finger.

Fig. 31 zeigt die Mantelabwicklung eines weiteren erfindungsgemäßen Dübels 170. Die Finger 18a, 18b und 18c des ersten Dübelteils verjüngen sich in der Mantelabwicklung gesehen dabei nach unten. Die Finger 18a, 18b, 18c weisen dadurch jeweils die Form eines Dreiecks mit gekappter Spitze auf. In gleicher Weise sind die Finger 22a, 22b, 22c des zweiten Dübelteils ausgebildet. Im ineinandergesteckten Zustand der beiden Dübelteile, wenn die Seitenflächen benachbarter Finger 18a bis 18c und 22a bis 22c aneinander anliegen, bilden die Finger eine durchgehende zylindrische Wandung des Dübels 170. Das erste Dübelteil weist Vorsprünge 86 auf, die sich ausgehend von einem Grundkörper des ersten Dübelteils nach unten erstrecken und im ineinandergesteckten Zustand die freien Enden der Finger 22a, 22b, 22c kontaktieren.

Bei der Ausführungsform der Fig. 31 können die Seitenflächen der Finger 18a, 18b, 18c und 22a bis 22c mit Energierichtungsgebern in Form von Vorsprüngen versehen sein, die in der Fig. 31 lediglich schematisch an nur einer Stelle mit den Bezugszeichen 181 bzw. 221 angedeutet sind. Solche Vorsprünge 181, 221 können, wie schematisch dargestellt, als lokal begrenzte Erhebungen ausgeführt sein, beispielsweise aber auch über die vollständige Länge der Seitenfläche durchlaufende Vorsprünge, beispielsweise aber auch einerseits als Vorsprünge, andererseits als Vertiefungen. Durch solche prinzipiell bekannten Energierichtungsgeber wird sichergestellt, dass die Seitenflächen der Finger 18a bis 18c mit den Seitenflächen der Finger 22a bis 22c beim Einleiten von Ultraschallenergie verschmelzen. Gegebenenfalls kann dadurch auch eine Verbindung mit der Kernschicht einer Leichtbauplatte erzielt werden. Das durch die Einleitung von Ultraschallenergie erwärmte und dann pastöse oder gar flüssige thermoplastische Material der Finger 18a bis 18c sowie 22a bis 22c tritt dann in die Kernschicht ein und verbindet sich nach dem Erkalten stoffschlüssig und/oder formschlüssig mit dem Material der Kernschicht. Die dreieckartige Gestaltung der Finger 18a bis 18c und 22a bis 22c hat den Vorteil, dass im zusammengesteckten Zustand der beiden Dübelteile eine definierte Endlänge des Dübels erzielt wird. Wenn sich die Seitenflächen der Finger 18a bis 18c und die Seitenflächen der Finger 22a bis 22c berühren, können die Dübelteile nicht weiter aufeinander zu verschoben werden. Das Material der Dübelteile kann dabei so ausgebildet sein, dass auch nach Einleitung von Ultraschallenergie die aneinander anliegenden Seitenflächen der Finger 18a bis 18c und 22a bis 22c eine Endlage der beiden Dübelteile zueinander definieren. Eine solche definierte Endlänge des Dübels im ineinandergesteckten Zustand kann bei Leichtbauplatten mit vergleichsweise dünnen und empfindlichen Deckschichten von Vorteil sein, da dann nicht befürchtet werden muss, dass die zweite oder untere Deckschicht von der Innenseite her durchgedrückt wird oder sichtbare Markierungen beim Fixieren der Dübels erhält.

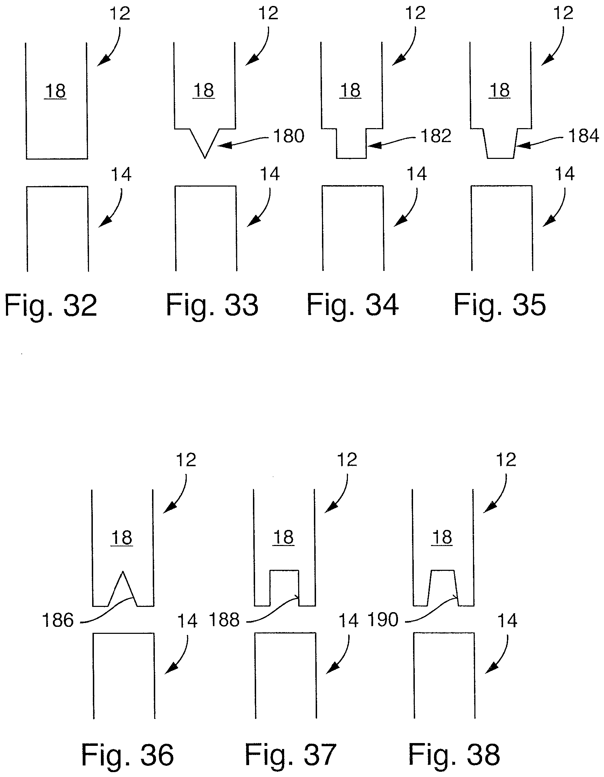

Die Darstellung der Fig. 32 zeigt schematisch einen Finger 18 eines im Übrigen nicht dargestellten ersten Dübelteils 12 und eine gegenüberliegende Anschlagfläche eines zweiten Dübelteils 14. Die Darstellung der Fig. 32 und im Übrigen auch die Darstellungen der nachfolgenden Fig. 33 bis 50 sind dabei rein schematisch und dienen lediglich der Verdeutlichung möglicher Gestaltungen der Endflächen der Finger und gegenüberliegender Anschlagsflächen. Bei der Ausführungsform der Fig. 32 ist die Endfläche des Fingers 18 senkrecht zu seiner Längsrichtung ausgebildet. Die gegenüberliegende Anschlagfläche des zweiten Dübelteils 14 ist ebenfalls senkrecht zur Längsrichtung des Fingers 18 ausgebildet und beispielsweise als Abschnitt einer Ringfläche des zweiten Dübelteils 14 ausgebildet. Beim Zusammenschieben des ersten Dübelteils 12 und des zweiten Dübelteils 14 trifft die Endfläche auf die gegenüberliegende Anschlagfläche auf und die Endfläche liegt dann flächig auf der Anschlagfläche auf. Beim Einleiten von Ultraschallenergie verteilt sich diese Ultraschallenergie dann über die gesamte Endfläche bzw. Anschlagfläche.

Fig. 33 zeigt eine weitere Ausführungsform der Endfläche eines Fingers 18 eines ersten Dübelteils 12. Die gegenüberliegende Anschlagfläche des zweiten Dübelteils 14 ist unverändert und somit senkrecht zur Längsrichtung des Fingers 18 ausgebildet. Der Finger 18 weist an seinem freien Ende einen Vorsprung 180 auf, der spitz zuläuft. Der Vorsprung 180 kann dabei als kegelförmige Spitze oder als sich in Umfangsrichtung erstreckender linienförmiger Vorsprung ausgebildet sein. Am Fuß der Spitze 180 geht dieser in seitliche Abschnitte der Endfläche des Fingers 18 über. Die Spitze 180 erstreckt sich somit nicht über die gesamte Breite des Fingers 18. Die Spitze 180 wirkt beim Einleiten von Ultraschallenergie als Energierichtungsgeber. Die Spitze 180 wird beim Aufsetzen der Spitze 180 auf die gegenüberliegende Anschlagfläche mit der vollständigen, in den Finger 18 eingeleiteten Ultraschallenergie beaufschlagt und erwärmt sich infolgedessen wesentlich schneller als die Endfläche des Fingers 18 gemäß der Ausführungsform der Fig. 32. Beim Zusammenschieben der beiden Dübelteile 12, 14 mit dem gleichzeitigen Einleiten von Ultraschallenergie wird die Spitze 180 somit aufschmelzen und eine Bewegung der beiden Dübelteile 12, 14 aufeinander zu ermöglichen. Diese Bewegung wird dann gestoppt, wenn die vollständige Spitze 180 aufgeschmolzen ist und der Finger 18 mit den seitlich der Spitze 180 angeordneten Endflächenabschnitten auf der gegenüberliegenden Anschlagfläche aufliegt.

Fig. 34 zeigt eine weitere Ausführungsform, bei der der Finger 18 des ersten Dübelteils 12 mit einem Vorsprung 182 versehen ist, der einen rechteckförmigen Querschnitt hat. Der Vorsprung 182 kann wieder als quaderförmiger Vorsprung ausgebildet sein oder als sich in Umfangsrichtung wenigstens ein Stück weit erstreckender linienförmiger Vorsprung. Die gegenüberliegende Anschlagfläche des zweiten Dübelteils 14 ist unverändert eben ausgebildet. Auch der Vorsprung 182 wirkt als Energierichtungsgeber. Da sich beim Aufschmelzen des Vorsprungs 182 dessen Querschnittsfläche nicht verändert, wird sich der Vorsprung 182 im Vergleich zu der Spitze 180 der Fig. 33 zunächst etwas später erwärmen und verflüssigen, beim Zusammenschieben der beiden Dübelteile 12, 14 verändert sich der Widerstand dann aber nicht, bis die seitlich des Vorsprungs 182 angeordneten Abschnitte der Endfläche des Fingers 18 dann auf der gegenüberliegenden Anschlagfläche aufliegen.

Fig. 35 zeigt eine weitere Ausführungsform, bei der der Finger 18 des ersten Dübelteils 12 an seinem freien Ende einen im Querschnitt trapezförmigen Vorsprung 184 aufweist. Der trapezförmige Vorsprung 184 nimmt nicht die vollständige Endfläche des Fingers 18 ein, so dass seitlich des Vorsprungs 184 noch ebene Endflächenabschnitte angeordnet sind.

Beim Auftreffen des Vorsprungs 184 auf die gegenüberliegende Anschlagfläche, die beispielsweise Teil einer Ringfläche sein kann, und beim gleichzeitigen Einleiten von Ultraschallenergie wirkt der Vorsprung 184 als Energierichtungsgeber. Das Material des Vorsprungs 184 wird somit aufschmelzen und das Zusammenschieben der beiden Dübelteile 12, 14 ist ermöglicht, bis die seitlich des Vorsprungs 184 angeordneten Endflächenabschnitte auf der gegenüberliegenden Anschlagfläche aufliegen.

Fig. 36 zeigt eine weitere Ausführungsform, bei der die Endfläche des Fingers 18 mit einer Einkerbung 186 versehen ist. Die Einkerbung 186 kann dabei als Nut oder auch als kegelförmige Vertiefung ausgebildet sein. Die gegenüberliegende Anschlagfläche des zweiten Dübelteils 14 ist unverändert eben und senkrecht zur Längsrichtung des Fingers 18 ausgebildet. Durch das Vorsehen der Einkerbung 186 entstehen seitlich der Einkerbung 186 zwei Vorsprünge, die als Energierichtungsgeber wirken.

Fig. 37 zeigt eine weitere Ausführungsform, bei der die Endfläche des Fingers 18 mit einer im Querschnitt rechteckförmigen, insbesondere quadratischen, Einkerbung versehen ist, die wieder lokal oder als sich in Umfangsrichtung erstreckende Nut ausgebildet sein kann. Links und rechts der Einkerbung 188 entstehen dadurch zwei Vorsprünge mit jeweils rechteckförmigem Querschnitt, die als Energierichtungsgeber wirken.

Fig. 38 zeigt eine weitere Ausführungsform, bei der die Endfläche des Fingers 18 mit einer im Querschnitt trapezförmigen Einkerbung 190 versehen ist. Links und rechts der Einkerbung 190 entstehen zwei im Querschnitt trapezförmige Vorsprünge, die als Energierichtungsgeber wirken.

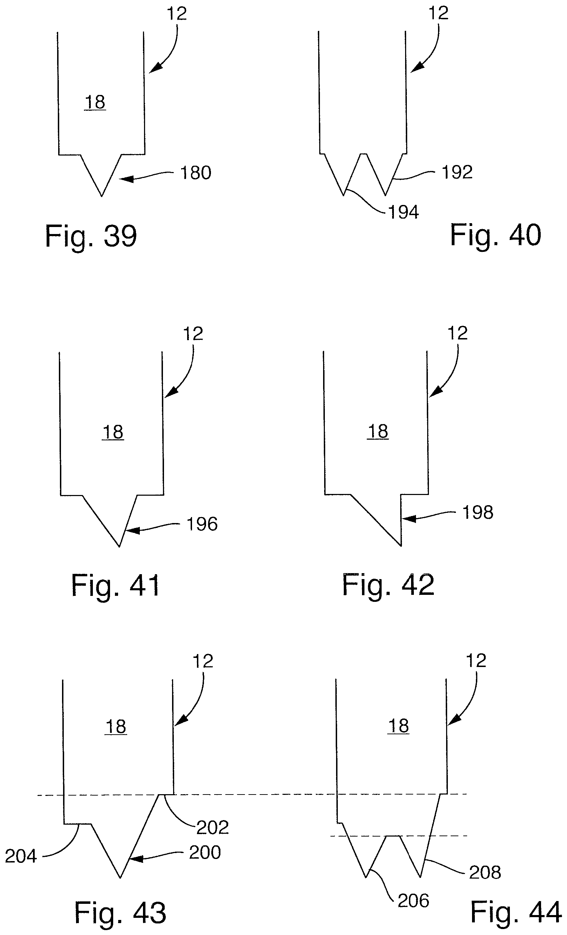

Fig. 39 zeigt erneut die Ausführungsform des Fingers 18 der Fig. 33 mit einer Spitze 180.

Fig. 40 zeigt zwei Spitzen 192 und 194 an der Endfläche des Fingers 18. Die Spitzen 192, 194 können wie die Spitze 180 als kegelförmige Spitzen oder als sich ein Stück weit in Umfangsrichtung erstreckende linienförmige Vorsprünge ausgebildet sein. Links und rechts sowie zwischen den beiden Spitzen 192, 194 sind noch ebene Abschnitte der Endfläche des Fingers 18 vorgesehen. Die Spitzen 192, 194 wirken als Energierichtungsgeber beim Einleiten von Ultraschall. Die ebenen Endflächenabschnitte zwischen den Spitzen 192, 194 haben eine Anschlagwirkung, so dass das Zusammenschieben der beiden Dübelteile beim Einleiten von Ultraschallenergie begrenzt ist.

Fig. 41 zeigt eine weitere Ausführungsform, bei der eine Spitze 196 der Endfläche des Fingers 18 im Querschnitt asymmetrisch ausgebildet ist.

Fig. 42 zeigt eine Ausführungsform, bei der eine Spitze 198 der Endfläche des Fingers 18 wieder asymmetrisch ausgebildet ist. Eine Seitenfläche der Spitze 198 verläuft dabei parallel zur Längsrichtung des Fingers 18. Auch die Spitzen 196, 198 können als lokale Spitzen oder, wie bereits beschrieben, als linienförmige Vorsprünge ausgeführt werden.

Fig. 43 zeigt eine Ausführungsform, bei der eine Spitze 200 oder ein linienförmiger Vorsprung des Fingers 18 im Querschnitt gesehen unterschiedlich lange Seitenflächen aufweist. Dies führt dazu, dass die ebenen Endflächenabschnitte 202 und 204 in Längsrichtung des Fingers 18 gesehen voneinander beabstandet sind.

Fig. 44 zeigt eine Ausführungsform, bei der die Endfläche des Fingers 18 zwei Spitzen 206, 208 oder linienförmige Vorsprünge aufweist. Die in Fig. 44 links liegende Seitenfläche der Spitze 206 ist kürzer als die in Fig. 44 rechts liegende Seitenfläche der Spitze 208. Dadurch liegen die ebenen Endflächenabschnitte des Fingers 18 auf unterschiedlichem Niveau. Auch der zwischen den beiden Spitzen 206, 208 gelegene ebene Endflächenabschnitt ist auf einem anderen Niveau als die beiden seitlichen Endflächenabschnitte angeordnet.

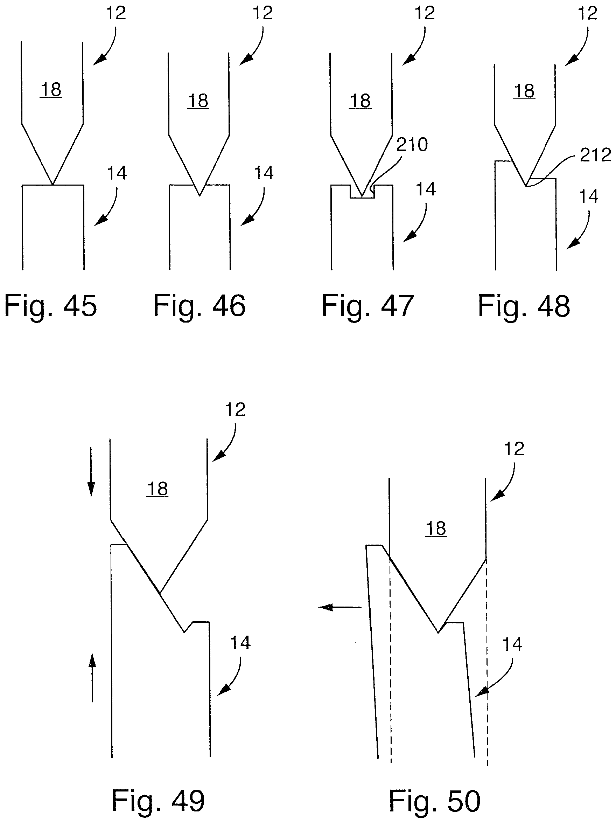

Fig. 45 zeigt eine weitere Ausführungsform, bei der die vollständige Endfläche des Fingers 18 kegelförmig oder als linienförmiger Vorsprung mit dreieckigem Querschnitt ausgebildet ist. Es ist zu erkennen, dass es beim Aufsetzen des Fingers 18 auf die gegenüberliegende, ebene Anschlagfläche des zweiten Dübelteils 14 zunächst zu einem Punktkontakt oder Linienkontakt kommt.

Fig. 46 zeigt eine Ausführungsform, bei der der Finger 18 wieder eine kegelförmige Spitze oder einen linienförmiger Vorsprung aufweist, die oder der seine vollständige Endfläche bildet, bei der aber die gegenüberliegende Anschlagfläche mit einer im Querschnitt dreieckförmigen Einkerbung versehen ist. Durch eine solche Einkerbung, die als kegelförmige Vertiefung oder als im Querschnitt dreieckförmige Nut ausgebildet sein kann, kann zum einen eine Konzentrierung der eingeleiteten Ultraschallenergie erfolgen, zum anderen kann aber auch eine geometrisch korrekte Positionierung des Fingers 18 auf der Anschlagfläche des zweiten Dübelteils 14 sichergestellt werden.

Fig. 47 zeigt eine Ausführungsform, bei der die Anschlagfläche des zweiten Dübelteils 14 mit einer Einkerbung 210 versehen ist, die im Querschnitt rechteckförmig ausgebildet ist. Die Einkerbung 210 kann als quaderförmige Vertiefung oder als im Querschnitt rechteckförmige Nut ausgebildet sein. Wie Fig. 47 zu entnehmen ist, ist die Position des Fingers 18 in seitlicher Richtung nicht exakt in der Einkerbung 210 definiert. Dadurch können Toleranzen zwischen dem Finger 18 und dem zweiten Dübelteil 14 ausgeglichen werden und es kann dennoch sichergestellt werden, dass der Finger 18 in der Einkerbung 210 angeordnet wird, wenn die beiden Dübelteile 12, 14 zusammengeschoben werden.

Fig. 48 zeigt eine Ausführungsform, bei der die Anschlagfläche des zweiten Dübelteils 14 zum einen abgestuft ist und zum anderen eine im Querschnitt dreieckförmige Einkerbung 212 aufweist.

Die in den Fig. 32 bis 48 beschriebenen Ausführungsformen der Gestaltung der Endflächen der Finger 18 des ersten Dübelteils 12 und der Anschlagflächen des zweiten Dübelteils 14 können im Rahmen der Erfindung selbstverständlich auch auf die Gestaltung der Endflächen 22 der Finger des zweiten Dübelteils 14 und der zugeordneten Anschlagflächen des ersten Dübelteils 12 angewendet werden. Darüber hinaus lassen sich die in den Fig. 32 bis 48 beschriebenen Gestaltungen der Endflächen der Finger und der zugeordneten Anschlagflächen in beliebiger Weise miteinander kombinieren. Beispielsweise kann die Ausbildung der Endfläche des Fingers 18 der Fig. 33 mit der Ausgestaltung der Anschlagfläche des zweiten Dübelteils 14 der Fig. 47 kombiniert werden. Alle weiteren möglichen Kombinationen aus den Fig. 32 bis 48 sind im Rahmen der Erfindung möglich und vorgesehen.

Fig. 49 zeigt eine weitere Ausführungsform, bei der der Finger 18 des ersten Dübelteils 12 mit einer Spitze versehen ist, die die vollständige Endfläche des Fingers 18 einnimmt. Die Spitze des Fingers 18 kann als kegelförmige Spitze oder als linienförmiger Vorsprung ausgebildet sein. Die Spitze des Fingers 18 kann beispielsweise auch die Form einnehmen, wie sie in den Fig. 41, 42, 43 beschrieben ist.

Die gegenüberliegende Anschlagfläche des zweiten Dübelteils 14 ist schräg ausgebildet. Fig. 49 zeigt einen ersten Zustand beim Zusammenschieben des ersten Dübelteils 12 und des zweiten Dübelteils 14, in dem sich das erste Dübelteil 12 und das zweite Dübelteil 14 gerade berühren. Die Spitze des Fingers 18 liegt in diesem Zustand an der schrägen Anschlagfläche des zweiten Dübelteils 14 an.

Fig. 50 zeigt den vollständig zusammengeschobenen Zustand des ersten Dübelteils 12 und des zweiten Dübelteils 14. Durch die aufeinandertreffenden schrägen Flächen der Spitze des Fingers 18 und der Anschlagfläche des zweiten Dübelteils 14 wird die Anschlagfläche des zweiten Dübelteils 14 seitlich verschoben, in Fig. 50 nach links. Eine solche seitliche Verschiebung wird zweckmäßigerweise so vorgesehen, dass sie in radialer Richtung zum ersten Dübelteil 12 und zum zweiten Dübelteil 14 erfolgt. Diese radiale Aufspreizung des zweiten Dübelteils 14 wird im Zustand der Fig. 50 dadurch gestoppt, dass die Spitze des Fingers 18 in einer Einkerbung in der Anschlagfläche des zweiten Dübelteils 14 zu liegen kommt. Durch die radiale Aufspreizung kann eine zusätzliche, mechanische Verankerung des zweiten Dübelteils 14 in der Leichtbauplatte erfolgen.

Die anhand der Fig. 49 und 50 erläuterte Ausführungsform kann selbstverständlich auch auf die Gestaltung der Endflächen der Finger 22 des zweiten Dübelteils 14 und der zugeordneten Anschlagflächen am ersten Dübelteil 12 angewendet werden.

## Patentansprüche

1. Dübel (10; 30; 40; 50; 60; 70; 110; 120; 130; 140; 150; 160; 170) zur Anordnung in Leichtbauplatten (90), wobei eine Leichtbauplatte eine erste Deckschicht (92) und eine zweite Deckschicht (94) aus kompaktem drucksteifen Material und eine zwischen den Deckschichten (92, 94) angeordnete Kernschicht (96) aus Material mit gegenüber den Deckschichten (92, 94) geringer Dichte aufweist, insbesondere Papierwaben, Schaumstoff oder Vollholz mit geringer Dichte, mit einem ersten Dübelteil (12; 32; 72; 112) und einem zweiten Dübelteil (14; 34; 74; 114), wobei das erste und das zweite Dübelteil relativ zueinander verschiebbar ausgebildet sind, **dadurch gekennzeichnet, dass** das erste Dübelteil (12; 32; 72; 112) und das zweite Dübelteil (14; 34; 74; 114) jeweils wenigstens zwei sich parallel zu einer Längsrichtung des Dübels (10; 30; 40; 50; 60; 70; 110; 120; 130; 140; 150; 160; 170) erstreckende Finger (18a, 18b, 18c, 18d) aufweisen, wobei die Finger (18a, 18b, 18c, 18d) des ersten Dübelteils (12; 32; 72; 112) und die Finger (22a, 22b, 22c, 22d) des zweiten Dübelteils (14; 34; 74; 114) im zusammengesteckten Zustand des ersten und des zweiten Dübelteils mindestens abschnittsweise ineinander greifen.

2. Dübel (10; 30; 40; 50; 60; 70; 110; 120; 130; 140; 150; 160; 170) nach Anspruch 1, **dadurch gekennzeichnet, dass** die Finger (18a, 18b, 18c, 22a, 22b, 22c) der beiden Dübelteile im montierten Zustand des Dübels (10; 30; 40; 50; 60; 70; 110; 120; 130; 140; 150; 160; 170) mindestens abschnittsweise einen zylindrischen, insbesondere kreiszylindrischen, Körper bilden.

3. Dübel (10; 30; 40; 50; 60; 70; 110; 120; 130; 140; 150; 160; 170) nach Anspruch 1 oder 2, **dadurch gekennzeichnet, dass** die Finger (18a, 18b, 18c, 18d, 22a, 22b, 22c, 22d) der beiden Dübelteile im montierten Zustand des Dübels (10; 30; 40; 50; 60; 70; 110; 120; 130; 140; 150; 160; 170) Wandabschnitte eines im Querschnitt ringförmigen, insbesondere kreisringförmigen, Körpers bilden.

4. Dübel (10; 30; 40; 50; 60; 70; 110; 120; 130; 140; 150; 160; 170) nach einem der vorstehenden Ansprüche, **dadurch gekennzeichnet, dass** die Finger (18a, 18b, 18c, 18d, 22a, 22b, 22c, 22d) im Querschnitt gesehen polygonale Segmente, insbesondere eines ringförmigen Körpers, bilden.

5. Dübel (10; 30; 40; 50; 60; 70; 110; 120; 130; 140; 150; 160; 170) nach einem der vorstehenden Ansprüche, **dadurch gekennzeichnet, dass** die Finger (18a, 18b, 18c, 18d, 22a, 22b, 22c, 22d) an ihrem freien Ende wenigstens teilweise eine schräg zur Längsrichtung des Dübels angeordnete Endfläche aufweisen.

6. Dübel (10; 30; 40; 50; 60; 70; 110; 120; 130; 140; 150; 160; 170) nach Anspruch 5, **dadurch gekennzeichnet, dass** die Endfläche schräg auf die Mittellängsachse des Dübels (10; 30; 40; 50; 60; 70; 110; 120; 130; 140; 150; 160; 170) zuläuft und/oder in einer Seitenansicht des Dübels (10; 30; 40; 50; 60; 70; 110; 120; 130; 140; 150; 160; 170) ansteigend verläuft.

7. Dübel (10; 30; 40; 50; 60; 70; 110; 120; 130; 140; 150; 160; 170) nach Anspruch 5 oder Anspruch 6, **dadurch gekennzeichnet, dass** im vollständig ineinander eingeschobenen Zustand des ersten Dübelteils (112) und des zweiten Dübelteils (114) die Endflächen der Finger (18. 22) wenigstens abschnittsweise am jeweils anderen Dübelteil ( 112, 114) anliegen.

8. Dübel (170) nach wenigstens einem der vorstehenden Ansprüche, **dadurch gekennzeichnet, dass** die Finger (18a, 18b, 18c, 22a, 22b, 22c) in Längsrichtung des Dübels (170) sich verjüngend ausgebildet sind, wobei die Finger (18a, 18b, 18c) des ersten Dübelteils sich nach unten verjüngend und die Finger (22a, 22b, 22c) des zweiten Dübelteils sich nach oben verjüngend ausgebildet sind.

9. Dübel (70; 110; 160; 170) nach wenigstens einem der vorstehenden Ansprüche, **dadurch gekennzeichnet, dass** die beiden Dübelteile und die Finger (18a, 18b, 18c, 18d, 22a, 22b, 22c) so ausgebildet sind, dass die Finger im montierten Zustand des Dübels (70; 110; 160; 170) an ihren freien Enden radial nach außen gedrückt werden.

10. Dübel (10; 30; 40; 50; 60; 70; 110; 120; 130; 140; 150; 160; 170) nach wenigstens einem der vorstehenden Ansprüche, **dadurch gekennzeichnet, dass** jedes Dübelteil einen, insbesondere ringförmigen, Grundkörper (78, 80) aufweist, mit dem die Finger (18a, 18b, 18c, 18d, 22a, 22b, 22c, 22d) jeweils eines Dübelteils verbunden sind.

11. Dübel (10; 30; 40; 50; 60; 70; 110; 120; 130; 140; 150; 160; 170) nach Anspruch 10, **dadurch gekennzeichnet, dass** sich die Finger (18a, 18b, 18c, 18d, 22a, 22b, 22c, 22d) von dem Grundkörper (78, 80) aus bis zu ihrem freien Ende erstrecken.

12. Dübel (110) nach wenigstens einem der vorstehenden Ansprüche, **dadurch gekennzeichnet, dass** das erste Dübelteil (112) und das zweite Dübelteil (114) identisch ausgebildet sind.

13. Verfahren zum Fixieren wenigstens eines Dübels (10; 30; 40; 50; 60; 70; 110; 120; 130; 140; 150; 160; 170) nach einem der vorstehenden Ansprüche in einer Leichtbauplatte (90) mit folgenden Schritten: Einbringen eines Lochs in die Leichtbauplatte (90), insbesondere eines Sacklochs (98), Einführen des ersten und des zweiten Dübelteils (12; 32; 72; 112; 14; 34; 74; 114) in das Loch, so dass die Finger (18a, 18b, 18c, 18d, 22a, 22b, 22c, 22d) der beiden Dübelteile wenigstens abschnittsweise ineinandergreifen, Beaufschlagen des Dübels (10; 30; 40; 50; 60; 70; 110; 120; 130; 140; 150; 160; 170) mit Ultraschallenergie, so dass das thermoplastische Material des Dübels (10; 30; 40; 50; 60; 70; 110; 120; 130; 140; 150; 160; 170) wenigstens in den Bereichen, in denen der Dübel (10; 30; 40; 50; 60; 70; 110; 120; 130; 140; 150; 160; 170) an der Innenwandung des Lochs im Bereich der ersten Deckschicht (92), der zweiten Deckschicht (94) und/oder im Bereich der Kernschicht (96) anliegt, erwärmt und in pastösen oder fließfähigen Zustand gebracht wird, in wenigstens eine der Deckschichten (92, 94) und/oder die Kernschicht (96) eindringt und nach dem Abschalten der Ultraschallenergie erkaltet, so dass der Dübel (10; 30; 40; 50; 60; 70; 110; 120; 130; 140; 150; 160; 170) stoffschlüssig und/oder formschlüssig in der Leichtbauplatte fixiert wird.

14. Verfahren nach Anspruch 13, **dadurch gekennzeichnet, dass** beim Beaufschlagen des Dübels (10; 30; 40; 50; 60; 70; 110; 120; 130; 140; 150; 160; 170) mit Ultraschallenergie aneinander anliegende Abschnitte der Finger (18a, 18b, 18c, 18d, 22a, 22b, 22c, 22d) erwärmt und in pastösen oder flüssigen Zustand gebracht werden, so dass nach dem Abschalten der Ultraschallenergie und Erkalten die Abschnitte stoffschlüssig miteinander verbunden sind.

15. Anordnung mit einem Dübel (10; 30; 40; 50; 60; 70; 110; 120; 130; 140; 150; 160; 170) nach einem der vorstehenden Ansprüche 1 bis 12 und einer Leichtbauplatte (90), wobei die Finger (18a, 18b, 18c, 18d, 22a, 22b, 22c, 22d) der beiden Dübelteile wenigstens abschnittsweise ineinandergreifen und wobei
das erste Dübelteil (12; 32; 72; 112) wenigstens an der ersten Deckschicht (92) fixiert ist, das zweite Dübelteil (14; 34; 74; 114) wenigstens an der zweiten Deckschicht (94) fixiert ist, und/oder das erste und das zweite Dübelteil an der Kernschicht (96) fixiert sind.

## Claims

1. A dowel pin (10; 30; 40; 50; 60; 70; 110; 120; 130; 140; 150; 160; 170) for arrangement in lightweight panels (90), wherein a lightweight panel has a first surface layer (92) and a second surface layer (94) of a compact compression-resistant material, and a core layer (96) arranged between the surface layers (92, 94) and made of a material with a low density compared with the surface layers (92, 94), in particular a paper honeycomb, a foam or solid wood with a low density, with a first dowel pin part (12; 32; 72; 112) and a second dowel pin part (14; 34; 74; 114), wherein the first and second dowel pin parts are designed such that they can be moved relative to each other, **characterised in that** the first dowel pin part (12; 32; 72; 112) and the second dowel pin part (14; 34; 74; 114) each have at least two fingers (18a, 18b, 18c, 18d) extending parallel to a longitudinal direction of the dowel pin (10; 30; 40; 50; 60; 70; 110; 120; 130; 140; 150; 160; 170), wherein the fingers (18a, 18b, 18c, 18d) of the first dowel pin part (12; 32; 72; 112) and the fingers (22a, 22b, 22c, 22d) of the second dowel pin part (14; 34; 74; 114) interlock with one another, at least in sections, in the plugged-together state of the first and second dowel pin parts.

2. The dowel pin (10; 30; 40; 50; 60; 70; 110; 120; 130; 140; 150; 160; 170) according to Claim 1, **characterised in that** in the assembled state of the dowel pin (10; 30; 40; 50; 60; 70; 110; 120; 130; 140; 150; 160; 170) the fingers (18a, 18b, 18c, 22a, 22b, 22c) of the two dowel pin parts form, at least in sections, a cylindrical, in particular a circular cylindrical, body.

3. The dowel pin (10; 30; 40; 50; 60; 70; 110; 120; 130; 140; 150; 160; 170) according to Claim 1 or 2, **characterised in that** in the assembled state of the dowel pin (10; 30; 40; 50; 60; 70; 110; 120; 130; 140; 150; 160; 170) the fingers (18a, 18b, 18c, 18d, 22a, 22b, 22c, 22d) of the two dowel pin parts form wall sections of a body, which is annular, in particular circular annular, in cross-section.

4. The dowel pin (10; 30; 40; 50; 60; 70; 110; 120; 130; 140; 150; 160; 170) according to one of the preceding claims, **characterised in that** viewed in cross-section, the fingers (18a, 18b, 18c, 18d, 22a, 22b, 22c, 22d) form polygonal segments, in particular of an annular body.

5. The dowel pin (10; 30; 40; 50; 60; 70; 110; 120; 130; 140; 150; 160; 170) according to one of the preceding claims, **characterised in that** at their free ends the fingers (18a, 18b, 18c, 18d, 22a, 22b, 22c, 22d) have, at least partially, an end surface arranged obliquely to the longitudinal direction of the dowel pin.

6. The dowel pin (10; 30; 40; 50; 60; 70; 110; 120; 130; 140; 150; 160; 170) according to Claim 5, **characterised in that** the end surface runs obliquely towards the central longitudinal axis of the dowel pin (10; 30; 40; 50; 60; 70; 110; 120; 130; 140; 150; 160; 170), and/or in a side view of the dowel pin (10; 30; 40; 50; 60; 70; 110; 120; 130; 140; 150; 160; 170) runs in an ascending manner.

7. The dowel pin (10; 30; 40; 50; 60; 70; 110; 120; 130; 140; 150; 160; 170) according to Claim 5 or Claim 6, **characterised in that** in the fully pushed-together state of the first dowel pin part (112) and the second dowel pin part (114), the end surfaces of the fingers (18, 22) abut, at least in sections, against the respectively other dowel pin part (112, 114).

8. The dowel pin (170) according to at least one of the preceding claims, **characterised in that** the fingers (18a, 18b, 18c, 22a, 22b, 22c) are tapered in the longitudinal direction of the dowel pin (170), wherein the fingers (18a, 18b, 18c) of the first dowel pin part are tapered downwards, and the fingers (22a, 22b, 22c) of the second dowel pin part are tapered upwards.

9. The dowel pin (70; 110; 160; 170) according to at least one of the preceding claims, **characterised in that** the two dowel pin parts and the fingers (18a, 18b, 18c, 18d, 22a, 22b, 22c) are designed such that in the assembled state of the dowel pin (70; 110; 160; 170) the fingers are pressed radially outwards at their free ends.

10. The dowel pin (10; 30; 40; 50; 60; 70; 110; 120; 130; 140; 150; 160; 170) according to at least one of the preceding claims, **characterised in that** each dowel pin part has an, in particular annular, base body (78, 80), to which the fingers (18a, 18b, 18c, 18d, 22a, 22b, 22c, 22d) of a respective dowel pin part are connected.

11. The dowel pin (10; 30; 40; 50; 60; 70; 110; 120; 130; 140; 150; 160; 170) according to Claim 10, **characterised in that** the fingers (18a, 18b, 18c, 18d, 22a, 22b, 22c, 22d) extend outwards from the base body (78, 80) to their free ends.

12. The dowel pin (110) according to at least one of the preceding claims, **characterised in that** the first dowel pin part (112) and the second dowel pin part (114) are designed identically.

13. A method for fixing at least one dowel pin (10; 30; 40; 50; 60; 70; 110; 120; 130; 140; 150; 160; 170), according to one of the preceding claims, in a lightweight panel (90), comprising the following steps:
Introduction of a hole in the lightweight panel (90), in particular a blind hole (98), Insertion of the first and second dowel pin parts (12; 32; 72; 112; 14; 34; 74; 114) into the hole so that the fingers (18a, 18b, 18c, 18d, 22a, 22b, 22c, 22d) of the two dowel pin parts interlock, at least in sections, Application of ultrasonic energy to the dowel pin (10; 30; 40; 50; 60; 70; 110; 120; 130; 140; 150; 160; 170), so that the thermoplastic material of the dowel pin (10; 30; 40; 50; 60; 70; 110; 120; 130; 140; 150; 160; 170) is heated, at least in the regions in which the dowel pin (10; 30; 40; 50; 60; 70; 110; 120; 130; 140; 150; 160; 170) abuts against the inner wall of the hole in the region of the first surface layer (92), the second surface layer (94), and/or in the region of the core layer (96), and brought into a pasty or flowable state, penetrates into at least one of the surface layers (92, 94), and/or the core layer (96), and cools after the ultrasonic energy is switched off, so that the dowel pin (10; 30; 40; 50; 60; 70; 110; 120; 130; 140; 150; 160; 170) is fixed in the lightweight panel with a material bond, and/or a form fit.

14. The method according to Claim 13, **characterised in that** when ultrasonic energy is applied to the dowel pin (10; 30; 40; 50; 60; 70; 110; 120; 130; 140; 150; 160; 170), sections of the fingers (18a, 18b, 18c, 18d, 22a, 22b, 22c, 22d) that are adjacent to one another are heated and brought into a pasty or liquid state, so that, after the ultrasonic energy has been switched off, and cooling has taken place, the sections are materially bonded to one another.

15. An arrangement with a dowel pin (10; 30; 40; 50; 60; 70; 110; 120; 130; 140; 150; 160; 170) according to one of the preceding Claims 1 to 12, and a lightweight panel (90), wherein the fingers (18a, 18b, 18c, 18d, 22a, 22b, 22c, 22d) of the two dowel pin parts interlock with each other, at least in sections, and wherein
the first dowel pin part (12; 32; 72; 112) is fixed at least to the first surface layer (92), the second dowel pin part (14; 34; 74; 114) is fixed at least to the second surface layer (94), and/or the first and second dowel pin parts are fixed to the core layer (96).

## Revendications

1. Cheville (10 ; 30 ; 40 ; 50 ; 60 ; 70 ; 110 ; 120 ; 130 ; 140 ; 150 ; 160 ; 170) destinée à être placée dans des panneaux alvéolaires (90), un panneau alvéolaire comportant une première couche de couverture (92) et une deuxième couche de couverture (94) en une matière compacte, rigide en compression et une couche d'âme (96) placée entre les couches de couverture (92, 94) en un matière de densité plus faible par rapport aux couches de couverture (92, 94), notamment en papier alvéolé, en mousse cellulaire ou en bois plein de faible densité, dotée d'une première partie de cheville (12 ; 32 ; 72 ; 112) et d'une deuxième partie de cheville (14 ; 34 ; 74 ; 114), la première et la deuxième parties de cheville étant conçues en étant coulissantes l'une par rapport à l'autre, **caractérisée en ce que** la première partie de cheville (12 ; 32 ; 72 ; 112) et la deuxième partie de cheville (14 ; 34 ; 74 ; 114) comportent chacune au moins deux doigts (18a, 18b, 18c, 18d) qui s'étendent à la parallèle d'une direction longitudinale de la cheville (10 ; 30 ; 40 ; 50 ; 60 ; 70 ; 110 ; 120 ; 130 ; 140 ; 150 ; 160 ; 170), lorsque la première et la deuxième parties de cheville sont emboîtées l'une dans l'autre, les doigts (18a, 18b, 18c, 18d) de la première partie de cheville (12 ; 32 ; 72 ; 112) et les doigts (22a, 22b, 22c, 22d) de la deuxième partie de cheville (14 ; 34 ; 74 ; 114) s'engageant l'un dans l'autre au moins par tronçons.

2. Cheville (10 ; 30 ; 40 ; 50 ; 60 ; 70 ; 110 ; 120 ; 130 ; 140 ; 150 ; 160 ; 170) selon la revendication 1, **caractérisée en ce que** lorsque la cheville (10 ; 30 ; 40 ; 50 ; 60 ; 70 ; 110 ; 120 ; 130 ; 140 ; 150 ; 160 ; 170) est montée, les doigts (18a, 18b, 18c, 22a, 22b, 22c) des deux parties de cheville forment au moins par tronçons un corps de forme cylindrique, notamment de forme cylindrique circulaire.

3. Cheville (10 ; 30 ; 40 ; 50 ; 60 ; 70 ; 110 ; 120 ; 130 ; 140 ; 150 ; 160 ; 170) selon la revendication 1 ou 2, **caractérisée en ce que** lorsque la cheville (10 ; 30 ; 40 ; 50 ; 60 ; 70 ; 110 ; 120 ; 130 ; 140 ; 150 ; 160 ; 170) est montée, les doigts (18a, 18b, 18c, 18d, 22a, 22b, 22c, 22d) des deux parties de cheville forme des segments de paroi d'un corps de section transversale de forme annulaire, notamment de forme annulaire circulaire.

4. Cheville (10 ; 30 ; 40 ; 50 ; 60 ; 70 ; 110 ; 120 ; 130 ; 140 ; 150 ; 160 ; 170) selon l'une quelconque des revendications précédentes, **caractérisée en ce que**, vus dans leur section transversale, les doigts (18a, 18b, 18c, 18d, 22a, 22b, 22c, 22d) forment des segments polygonaux, notamment d'un corps de forme annulaire.

5. Cheville (10 ; 30 ; 40 ; 50 ; 60 ; 70 ; 110 ; 120 ; 130 ; 140 ; 150 ; 160 ; 170) selon l'une quelconque des revendications précédentes, **caractérisée en ce que** sur leur extrémité libre, les doigts (18a, 18b, 18c, 18d, 22a, 22b, 22c, 22d) comportent au moins en partie une surface d'extrémité placée à l'oblique de la direction longitudinale de la cheville.

6. Cheville (10 ; 30 ; 40 ; 50 ; 60 ; 70 ; 110 ; 120 ; 130 ; 140 ; 150 ; 160 ; 170) selon la revendication 5, **caractérisée en ce que** la surface d'extrémité converge en oblique vers l'axe médian longitudinal de la cheville (10 ; 30 ; 40 ; 50 ; 60 ; 70 ; 110 ; 120 ; 130 ; 140 ; 150 ; 160 170) et/ou dans une vue latérale de la cheville (10 ; 30 ; 40 ; 50 ; 60 ; 70 ; 110 ; 120 ; 130 ; 140 ; 150 ; 160 ; 170), s'écoule en montée.

7. Cheville (10 ; 30 ; 40 ; 50 ; 60 ; 70 ; 110 ; 120 ; 130 ; 140 ; 150 ; 160 ; 170) selon la revendication 5 ou la revendication 6, **caractérisée en ce que** lorsque la première partie de cheville (112) et la deuxième partie de cheville (114) sont totalement emboîtées l'une dans l'autre, les surfaces d'extrémité des doigts (18, 22) sont adjacentes au moins par tronçons à l'autre partie de cheville (112, 114) respective.

8. Cheville (170) selon au moins l'une quelconque des revendications précédentes, **caractérisée en ce que** les doigts (18a, 18b, 18c, 22a, 22b, 22c) sont conçus en se rétrécissant dans la direction longitudinale de la cheville (170), les doigts (18a, 18b, 18c) de la première partie de cheville étant conçus en se rétrécissant vers le bas et les doigts (22a, 22b, 22c) de la deuxième partie de cheville étant conçus en se rétrécissant vers le haut.

9. Cheville (70 ; 110 ; 160 ; 170) selon au moins l'une quelconque des revendications précédentes, **caractérisée en ce que** les deux parties de cheville et les doigts (18a, 18b, 18c, 18d, 22a, 22b, 22c) sont conçus de telle sorte que, lorsque la cheville (70 ; 110 ; 160 ; 170) est montée, sur leurs extrémités libres, les doigts sont poussés vers l'extérieur en direction radiale.

10. Cheville (10 ; 30 ; 40 ; 50 ; 60 ; 70 ; 110 ; 120 ; 130 ; 140 ; 150 ; 160 ; 170) selon au moins l'une quelconque des revendications précédentes, **caractérisée en ce que** chaque partie de cheville comporte un corps de base (78, 80), notamment de forme annulaire, par lequel les doigts (18a, 18b, 18c, 18d, 22a, 22b, 22c, 22d) de chaque fois une partie de cheville sont reliés.

11. Cheville (10 ; 30 ; 40 ; 50 ; 60 ; 70 ; 110 ; 120 ; 130 ; 140 ; 150 ; 160 ; 170) selon la revendication 10, **caractérisée en ce que** les doigts (18a, 18b, 18c, 18d, 22a, 22b, 22c, 22d) s'étendent à partir du corps de base (78, 80) jusqu'à leur extrémité libre.

12. Cheville (110) selon au moins l'une quelconque des revendications précédentes, **caractérisée en ce que** la première partie de cheville (112) et la deuxième partie de cheville (114) sont conçues à l'identique.

13. Procédé, destiné à fixer au moins une cheville (10 ; 30 ; 40 ; 50 ; 60 ; 70 ; 110 ; 120 ; 130 ; 140 ; 150 ; 160 ; 170) selon l'une quelconque des revendications précédentes dans un panneau alvéolaire (90), comportant les étapes suivantes consistant à : ménager un trou, notamment un trou borgne (98) dans le panneau alvéolaire (90), introduire la première et la deuxième parties de cheville (12 ; 32 ; 72 ; 112 ; 14 ; 34 ; 74 ; 114) dans le trou, de sorte que les doigts (18a, 18b, 18c, 18d, 22a, 22b, 22c, 22d) des deux parties de cheville s'engagent l'un dans l'autre au moins par tronçons, exposer la cheville (10 ; 30 ; 40 ; 50 ; 60 ; 70 ; 110 ; 120 ; 130 ; 140 ; 150 ; 160 ; 170) à de l'énergie ultrasonique, de sorte qu'au moins dans les zones dans lesquelles la cheville (10 ; 30 ; 40 ; 50 ; 60 ; 70 ; 110 ; 120 ; 130 ; 140 ; 150 ; 160 ; 170) est adjacente à la paroi intérieure du trou, dans la zone de la première couche de couverture (92), de la deuxième couche de couverture (94) et/ou dans la zone de la couche d'âme (96), la matière thermoplastique de la cheville (10 ; 30 ; 40 ; 50 ; 60 ; 70 ; 110 ; 120 ; 130 ; 140 ; 150 ; 160 ; 170) chauffe et soit amenée dans un état pâteux ou fluide, pénètre dans au moins l'une des couches de couverture (92, 94) et/ou dans la couche d'âme (96) et refroidisse après la coupure de l'énergie ultrasonique, de sorte que la cheville (10 ; 30 ; 40 ; 50 ; 60 ; 70 ; 110 ; 120 ; 130 ; 140 ; 150 ; 160 ; 170) soit fixée par adhésion de matière et/ou par complémentarité de forme dans le panneau alvéolaire.

14. Procédé selon la revendication 13, **caractérisé en ce que** lorsque la cheville (10 ; 30 ; 40 ; 50 ; 60 ; 70 ; 110 ; 120 ; 130 ; 140 ; 150 ; 160 ; 170) est exposée à de l'énergie ultrasonique, des tronçons mutuellement adjacents des doigts (18a, 18b, 18c, 18d, 22a, 22b, 22c, 22d) chauffent et sont amenés dans un état pâteux ou fluide, de sorte qu'après la coupure de l'énergie ultrasonique et refroidissement, les tronçons soient reliés l'un à l'autre par adhésion de matière.

15. Ensemble, composé d'une cheville (10 ; 30 ; 40 ; 50 ; 60 ; 70 ; 110 ; 120 ; 130 ; 140 ; 150 ; 160 ; 170) selon l'une quelconque des revendications précédentes 1 à 12 et d'un panneau alvéolaire (90), les doigts (18a, 18b, 18c, 18d, 22a, 22b, 22c, 22d) des deux parties de cheville s'engageant l'un dans l'autre au moins par tronçons et
la première partie de cheville (12 ; 32 ; 72 ; 112) étant fixée au moins sur la première couche de couverture (92), la deuxième partie de cheville (14 ; 34 ; 74 ; 114) étant fixée au moins sur la deuxième couche de couverture (94) et/ou la première et la deuxième parties de cheville étant fixées sur la couche d'âme (96).
